(19) **Europäisches Patentamt**

**European Patent Office**

**Office européen des brevets**

(11) **EP 1 426 931 A2**

(12) **EUROPEAN PATENT APPLICATION**

(43) Date of publication:
**09.06.2004 Bulletin 2004/24**

(51) Int Cl.⁷: **G11B 7/0045**

(21) Application number: **03257628.2**

(22) Date of filing: **04.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **04.12.2002 JP 2002352655**
**24.03.2003 JP 2003080989**

(71) Applicant: **Ricoh Company**
**Tokyo 143-8555 (JP)**

(72) Inventor: **Yamamoto, Norihiro**
**Yokohama-shi Kanagawa (JP)**

(74) Representative: **Mounteney, Simon James**
**MARKS & CLERK,**
**57-60 Lincoln's Inn Fields**
**London WC2A 3LS (GB)**

(54) **Optical data recording method and optical disk device**

(57)    A method of recording data to an optical disk is disclosed that enables correction of recording power during an recording operation using multi-pulse recording. The method includes the steps of interrupting a recording operation when a predetermined amount of data has been continuously recorded in region A1 of the recording area A of the optical data recording medium, measuring the recording state of the optical data recording medium at a place B1 immediately before the interruption, correcting the recording power for the next recording operation based on the measured recording state, and starting the next recording operation in region A2 by using the laser beam with the determined recording power in the optical data recording medium at a position immediately after the interruption.

## FIG.1

EP 1 426 931 A2

**Description**

BACKGROUND OF THE INVENTION

1. Field of the Invention

The present invention relates to an optical data recording method, an optical data recording device, an optical data processing method, and an optical disk device.

2. Description of the Related Art

In order to precisely record data throughout an optical data recording medium, such as an optical disk, it is necessary to determine the initial light emission power of a semiconductor laser (abbreviated as LD, and LD power, respectively, below) by means of OPC (Optimum Power Control) and then to modify the LD power by means of ROPC (Running OPC) to compensate for changes of temperature of the LD and sensitivity of a recording film of the optical disk.

In an OPC process, trial writing is performed in a PCA (Power Calibration Area) of an optical data recording medium before actually recording data in the optical data recording medium; from the results of trial writing, optimum LD power for actually recording data on the optical data recording medium is determined.

After OPC, actual data are recorded in the optical data recording medium. In the course of recording, however, the optimum LD power changes due to fluctuations of temperature of the LD, efficiency of the LD, wavelength of the LD, and sensitivity of the recording film of the optical disk. Therefore it is necessary to adjust the optimum LD power. The ROPC is for this adjustment.

Specifically, after determining an optimum strength of light reflected from the optical data recording medium during recording in advance in the OPC process, in the ROPC process, the LD power is adjusted by feeding back the strength of light reflected from a mark formed on the optical data recording medium during the actual data recording, so that the strength of light reflected from the mark equals the optimum strength obtained beforehand.

For example, Japanese Laid Open Patent Application No. 9-270128 discloses an optical disk recording and reproduction device in which correction is made for the LD power during recording by ROPC.

Japanese Laid Open Patent Application No. 2000-057604 discloses a device which improves reproduction performance thereof by giving an optimum offset to a focusing error signal.

In an optical disk device, an optical pickup detects a focusing error signal (abbreviated as FE signal below), and the position of an object lens is adjusted in the focusing direction is adjusted so that the FE signal becomes zero; this is the so-called object lens focusing position control. Usually, it is known that recording and reproduction performance is better with the position adjusted by the above focusing position control slightly shifted from the position where the FE signal becomes zero. For this reason, usually, an offset is given to the FE signal, and focusing position control is performed so that the FE signal with the offset becomes zero, thereby improving the recording and reproduction performance.

In ROPC described above, although it is possible to measure the strength of the light reflected from the optical data recording medium when recording data to the optical data recording medium by using a rectangular signal to drive the LD, it is difficult to measure the strength of the reflected light when recording data to the optical data recording medium by using a number of pulses to drive the LD (the so-called multi-pulse recording). For this reason, in the latter case, it is difficult to correct the LD power during data recording.

Multi-pulse recording is required in many cases. For example, in multi-pulse recording, the margin of the LD power is greater than that of the rectangular wave recording; therefore, the multi-pulse recording is required in the case in which the margin of the LD power is quite narrow when recording data in the optical data recording medium with high density at high speed.

Further, the characteristics of the optical disk and the optical disk device depend on the recording position along the radial direction of the optical disk. Therefore, the recording and reproducing quality changes with the redial position on the optical disk, and the focus offset resulting in the optimum reproducing quality changes with the redial position on the optical disk.

SUMMARY OF THE INVENTION

Accordingly, it is a general object of the present invention to solve the above problems of the related art.

A first more specific object of the present invention is to provide a method that is capable of correction of recording power while recording data to an optical data recording medium and enables high recording quality at any position on the optical data recording medium even when using multi-pulse recording, a data recording device, and a data processing device.

A second more specific object of the present invention is to provide an optical disk device having high reproducing quality and recording quality at any position on an optical disk.

According to a first aspect of the present invention, there is provided an optical data recording method comprising the steps of interrupting an operation of recording data in an optical data recording medium when a predetermined amount of data is continuously recorded in the optical data recording medium by using a laser beam emitted from a laser, measuring a recording state of the optical data recording medium immediately before the interruption, correcting a recording power of the laser beam for a next recording operation in the optical data recording medium based on the measured recording state, and starting the next recording operation by using the laser beam with the determined recording power in the optical data recording medium at a position immediately after the interruption.

Preferably, in the step of measuring, the recording state of the optical data recording medium is obtained by measuring an asymmetry of a reproduced signal.

Preferably, in the step of measuring, the recording state of the optical data recording medium is obtained by measuring a modulation of a reproduced signal.

Preferably, in the step of interrupting, the predetermined amount of data is determined such that a time period required for completing recording of the predetermined amount of data is shorter than a time period over which a recording quality degrades due to a rise of a temperature of the laser.

Preferably, in the step of interrupting, the predetermined amount of data is determined such that a length along a radial direction of the optical data recording medium covered by the predetermined amount of data is shorter than a length over which a recording quality degrades due to a fluctuation of a sensitivity of a recording layer of the optical data recoding medium.

Preferably, in the step of correcting, a change of the recording power in each correction is restricted to be less than a predetermined value.

Preferably, in the step of measuring, the recording state is measured during a seek operation performed for the next recording operation after the interrupted recording operation.

According to the present invention, after a specified amount of data is recorded, the recording operation is interrupted, and the recording state, for example, the asymmetry, or the modulation of a signal reproduced right before the interruption, is measured, and based on the measurement result, the recording power of the laser for the next recording operation is corrected, and the next recording operation is performed with the corrected recording power. In this way, even if the laser is driven by a multi-pulse signal, it is possible to maintain the recording power of the laser to be an optimum value, and high recording quality is obtainable all over the optical data recording medium.

In addition, according to the present invention, even when the temperature fluctuation of the laser is a predominant factor causing reduction of the recording quality, or the fluctuation of a sensitivity of the recording layer of the optical data recording medium is a predominant factor causing reduction of the recording quality, it is possible to maintain the power of the laser to be an optimum value during a recording operation, and high recording quality is obtainable all over the optical data recording medium.

In addition, by determining the recording state by measuring asymmetry of the reproduced signal, even when a multi-pulse driving signal is used to record data to a recordable medium, such as a CD-R, or DVD-R, it is possible to maintain the recording power of the laser to be an optimum value, and high recording quality is obtainable all over the optical medium. On the other hand, by determining the recording state may by measuring the modulation of the reproduced signal, even when a multi-pulse driving signal is used to record data to a rewritable optical recording medium, such as a CD-RW, or DVD-RW, it is possible to maintain the recording power of the laser to be an optimum value, and high recording quality is obtainable all over the optical recording medium.

By limiting an amount of the change of the recording power in one correction, even if there are defects in the recording region of the optical data recording medium and a wrong recording state is obtained, the recording quality does not degrade too much with this one improper correction, therefore, it is possible to obtain stable recording quality.

By measuring the recording state during a seek operation for recording, the time period of the recording interruption can be shortened, hence the recording time can be shortened.

According to a second aspect of the present invention, there is provided an optical data recording device comprising a recording state measurement unit configured to measure a recording state of an optical data recording medium, a recording power calculation unit configured to calculate a recording power of a laser beam emitted from a laser for a next recording operation in the optical data recording medium based on the measured recording state, a laser control unit configured to control the laser based on the calculated recording power, and a recording control unit configured to interrupt an operation of recording data in the optical data recording medium when a predetermined amount of data is continuously recorded in the optical data recording medium, direct the recording state measurement unit to measure a recording state of the optical data recording medium immediately before the interruption, direct the recording power calculation unit and the laser control unit to determine a recording power of the laser beam for a next recording operation in the optical data recording medium based on the measured recording state, and start the next recording operation by using the laser beam with the determined recording power in the optical data recording medium at a position immediately after the interruption.

According to a third aspect of the present invention, there is provided an optical data processing device comprising an optical data recording device including a recording state measurement unit configured to measure a recording state of an optical data recording medium, a recording power calculation unit configured to calculate a recording power of a laser beam emitted from a laser for a next recording operation in the optical data recording medium based on the measured recording state, a laser control unit configured to control the laser based on the calculated recording power, a recording control unit configured to interrupt an operation of recording data in the optical data recording medium when a predetermined amount of data is continuously recorded in the optical data recording medium, direct the recording state measurement unit to measure a recording state of the optical data recording medium immediately before the interruption, direct the recording power calculation unit and the laser control unit to determine a recording power of the laser beam for a next recording operation in the optical data recording medium based on the measured recording state, and start the next recording operation by using the laser beam with the determined recording power in the optical data recording medium at a position immediately after the interruption.

According to a fourth aspect of the present invention, there is provided an optical data recording method comprising the steps of interrupting an operation of recording data in an optical data recording medium when a predetermined amount of data is continuously recorded in the optical data recording medium by using a laser beam emitted from a laser, measuring a recording state of the optical data recording medium immediately before the interruption to measure a recording quality, correcting a recording power of the laser beam for a next recording operation in the optical data recording medium based on the determined recording quality, and starting the next recording operation by using the laser beam with the determined recording power in the optical data recording medium at a position immediately after the interruption, wherein in the step of measuring, the recording quality is measured in a seek operation performed when starting the next recording operation after the interrupted recording operation, a setting being made so that a reading quality is an optimum during the measurement of the recording quality, and the setting being made so that the recording quality is an optimum after the measurement of the recording quality.

Preferably, in the step of measuring, an offset of a focus position of a focus servo is set so that the reading quality is an optimum during the measurement of the recording quality in the seek operation, and the offset of the focus position is set so that the recording quality is an optimum after the measurement of the recording quality.

Preferably, in the step of measuring, an offset of a tilt of the optical data recording medium is set so that the reading quality is an optimum during the measurement of the recording quality in the seek operation, and the offset of the tilt is set so that the recording quality is an optimum after the measurement of the recording quality.

According to the present invention, during the seek operation for measuring the recording quality, the offset is set so that the reading quality is optimized, and after the measurement of the recording quality, the offset is set so that the recording quality is optimized.

Therefore, the offset when measuring the recording quality is the same as that when reading data in the trial writing region, and this optimizes the setting of the offset.

According to a fifth aspect of the present invention, there is provided an optical data recording device comprising a recording state measurement unit configured to measure a recording state of an optical data recording medium to measure a recording quality, a recording power calculation unit configured to calculate a recording power of a laser beam emitted from a laser for a next recording operation in the optical data recording medium based on the measured recording quality, a laser control unit configured to control the laser based on the calculated recording power, a recording control unit configured to interrupt an operation of recording data in the optical data recording medium when a predetermined amount of data is continuously recorded in the optical data recording medium, direct the recording state measurement unit to measure a recording state of the optical data recording medium immediately before the interruption, direct the recording power calculation unit and the laser control unit to determine a recording power of the laser beam for a next recording operation in the optical data recording medium based on the measured recording quality, and start the next recording operation by using the laser beam with the determined recording power in the optical data recording medium at a position immediately after the interruption, and a focus position offset setting unit configured to set an offset of a focus position of a focus servo, wherein the focus position offset setting unit sets the offset of the focus position of the focus servo so that the reading quality is an optimum during the measurement of the recording quality in the seek operation, and sets the offset of the focus position so that the recording quality is an optimum after the measurement of the recording quality in the seek operation.

According to a sixth aspect of the present invention, there is provided an optical data recording device comprising a recording state measurement unit configured to measure a recording state of an optical data recording medium to measure a recording quality, a recording power calculation unit configured to calculate a recording power of a laser beam emitted from a laser for a next recording operation in the optical data recording medium based on the measured recording quality, a laser control unit configured to control the laser based on the calculated recording power, a recording control unit configured to interrupt an operation of recording data in the optical data recording medium when a predetermined amount of data is continuously recorded in the optical data recording medium, direct the recording state measurement unit to measure a recording state of the optical data recording medium immediately before the interruption, direct the recording power calculation unit and the laser control unit to determine a recording power of the laser beam for a next recording operation in the optical data recording medium based on the measured recording quality, and start the next recording operation by using the laser beam with the determined recording power in the optical data recording medium at a position immediately after the interruption, and a tilt offset setting unit configured to set an offset of a tilt of the optical data recording medium, wherein the tilt offset setting unit sets the offset of the tilt so that the reading quality is an optimum during the measurement of the recording quality in the seek operation, and sets the offset of the tilt so that the recording quality is an optimum after the measurement of the recording quality in the seek operation.

According to a seventh aspect of the present invention, there is provided an optical disk device for recording data to or reproducing data from an optical disk, comprising an optical pickup that writes data to or reads data from the optical disk, a focusing error signal generating unit that generates a focusing error signal from a signal output from the optical pickup, an offset generating unit that generates an offset of a focusing position according to a preset value, an accumulator that adds the offset to the focusing error signal and the output the summed signal, a filter circuit that adjusts a gain and a phase of a focusing servo system based on the summed signal from the accumulator, and a driver circuit that drives the optical pickup according to a signal output from the filter circuit. In a seek operation, an optimum offset of the focusing position is set to the offset generating unit as the preset value, and the seek operation is finished after setting a time period in a timer, in a recording operation or a reproducing operation after the seek operation, a count in the timer is monitored to determine whether the time period set in the time elapsed, and the recording operation or reproducing operation is interrupted when the time period set in the timer elapsed, and a next seek operation is performed and a next recording operation or a next reproducing operation is started at a position of the interruption.

Preferably, the time period set to the timer is determined so that a variation of the optimum of the offset of the focus position due to movement of the optical pickup along a radial position on the optical disk in the recording operation or the reproducing operation does not influence a recording quality or a reproducing quality.

Preferably, the time period set to the timer is determined based on a variation of the optimum of the offset of the focus position.

According to the present invention, it is possible to precisely correct the focus offset related to the optimum recording quality that changes along the radial position of the optical disk, and thus to obtain high recording or reproducing quality.

Because the time set to the timer is determined by considering variation of the optimum focus offset with the radial position on the optical disk, which occurs when the optical pickup moves along the radial direction of the optical disk in the recording operation or the reproducing operation, and this value is determined so that the change of the optimum focus offset does not influence the recording or reproducing quality, it is possible to re-adjust the optimum focus offset to a new optimum value before the previous optimum focus offset becomes inappropriate due to movement of the optical pickup along the radial direction of the optical disk in the recording operation or the reproducing operation. Thus, it is possible to obtain high recording or reproducing quality.

Preferably, the optical disk device further comprises a storage unit configured to store focus offset data measured in advance and corresponding to optimum recording or reproducing quality at a plurality of positions on the optical disk at different radii and at equal intervals. In the optical disk device, one of the focus offset data is read out from the storage unit and set to the offset generating unit in the recording operation or the reproducing operations as the offset added to the focusing error signal.

According to the present invention, because the storage unit is provided to store focus offset data, in actual recording or reproducing operations, the focus offset may be read out from the storage unit and set to the offset generating unit. Therefore, in practical use, the adjustment when mounting the optical disk is not necessary, and the adjustment time in mounting can be shortened.

Preferably, when mounting the optical disk, an offset of the focus position resulting in the optimum recording quality or the optimum reproducing quality is measured beforehand in an inner area of the optical disk, in a region from the most inner area of the optical disk (for example, the area near the inner edge) to a radial position of the optical disk where a change of the offset of the focus position begins to increase, the measured offset of the focus position is set to the offset generating unit, in the most peripheral region of the optical disk (for example, the area near the outer edge), an offset of the focus position obtained by shifting the offset measured in the inner area by a preset value is set to the offset generating unit, and in a region from the position where the change of the offset of the focus position begins to increase to the most peripheral region of the optical disk, an offset calculated by a first order approximation is set to the offset generating unit.

According to the present invention, even when the optimum focus offset depends on a specific optical disk, it is possible to appropriately determine the focus offset and obtain high recording quality or high reproducing quality.

Preferably, when mounting the optical disk, offsets of the focus position resulting in the optimum recording quality or the optimum reproducing quality are measured beforehand in an inner area and a peripheral area of the optical disk, respectively, in a region from the most inner area (for example, the area near the inner edge) of the optical disk to a radial position of the optical disk where a change of the offset of the focus position begins to increase, the offset measured in the inner area is set to the offset generating unit, in the most peripheral region of the optical disk, the offset measured in the peripheral area is set to the offset generating unit, and in a region from the position where the change of the offset of the focus position begins to increase to the most peripheral region of the optical disk, an offset of the focus position calculated by a first order approximation is set to the offset generating unit.

According to the present invention, since optimum focus offsets in both the inner area and the peripheral area are measured, it is possible to obtain higher recording quality or reproducing quality.

Preferably, the optical disk device further comprises a jitter measurement unit configured to measure a jitter of the reproduced signal from the pickup. The optimum of the offset of the focus position is determined under a condition that the jitter is the smallest.

According to the present invention, by providing a jitter measurement unit to measure the jitter of the reproduced signal and determining the optimum focus offset under the condition that the jitter is the smallest, it is possible to obtain higher recording quality or reproducing quality.

Preferably, the optical disk device further comprises an amplitude measurement unit configured to measure amplitude of the reproduced signal from the pickup. The optimum of the offset of the focus position is determined under a condition that the amplitude is the highest.

Preferably, if the optical disk is not recorded, data are recorded in a trial recording region of the optical disk, and the data recorded in the trial recording region are reproduced to determine the offset of the focus position that results in the optimum of the reproducing quality; if the optical disk is recorded, data in a recorded region of the optical disk are reproduced to determine the offset of the focus position that results in the optimum of the reproducing quality under a condition that an amplitude of the reproduced signal is the highest.

According to the present invention, even if the optical disk is un-recorded, it is possible to adjust the optimum focus offset by using the trial writing region and the reproduced signal; if the optical disk is recorded, data in the recorded region are reproduced without using the trial writing region.

Preferably, the optical disk device further comprises a wobbling signal amplitude measurement unit configured to measure amplitude of a wobbling signal. The optimum of the offset of the focus position is determined under a condition that the amplitude of the wobbling signal is the highest.

According to the present invention, by providing the unit for measuring the amplitude of a wobbling signal, and by adjusting the focus offset so that the amplitude of the wobbling signal becomes a maximum, it is possible to reliably obtain address data and synchronization data and to achieve higher recording quality or reproducing quality.

These and other objects, features, and advantages of the present invention will become more apparent from the following detailed description of preferred embodiments given with reference to the accompanying drawings.

BRIEF DESCRIPTION OF THE DRAWINGS

FIG. 1 is a schematic view of a configuration of an optical disk in a first embodiment of the present invention;
FIGS. 2A through 2C are examples showing behavior of the asymmetry parameter $\beta$ of a reproduced signal in the first embodiment of the present invention;
FIG. 3 is a view of an example of a configuration of an optical data recording device according to the first embodiment of the present invention;
FIG. 4 is a view of an example of a configuration of an optical data recording device according to a second embodiment of the present invention;
FIG. 5 is a diagram explaining the principle of the recording method related to the second embodiment of the present invention;
FIG. 6 is a view of a configuration of an optical data recording device according to a third embodiment of the present invention;
FIG. 7 is a flowchart showing a seek operation for measuring the recording quality prior to the interruption of a recording operation in the third embodiment;
FIG. 8 is a view of a configuration of an optical data recording device according to a fifth embodiment of the present invention;
FIG. 9 is a flowchart showing the seek operation for measuring the recording quality (or recording state) prior to the interruption of a recording operation in the fifth embodiment;
FIG. 10 is a view of a configuration of an optical data recording and reproducing device according to a sixth embodiment of the present invention;
FIG. 11 is a graph showing a relation between an optimum focus offset and the radial position of the optical disk in the sixth embodiment;
FIG. 12 is a table showing an example of the measured optimum focus offset at different radii in the sixth embodiment;
FIG. 13 are graphs showing the focus offset resulting in the optimum reproducing quality and the focus offset resulting in the optimum recording quality in the sixth embodiment;
FIG. 14 is a flowchart showing the operation of adding the offset data to the FE signal in the sixth embodiment;

FIG. 15 is a graph showing the variation of an optimum focus offset in a recording operation or a reproducing operation in the sixth embodiment;

FIG. 16 is a view of a configuration of an optical data recording and reproducing device according to a seventh embodiment of the present invention;

FIG. 17 is a graph showing a relation between the focus offset and the radial position of an optical disk according in the seventh embodiment of the present invention;

FIG. 18 is a flowchart showing a method of determining the focus offset in the seventh embodiment; and

FIG. 19 is a graph showing a relation between the focus offset and the radial position of an optical disk according to the seventh embodiment of the present invention.

## DESCRIPTION OF THE PREFERRED EMBODIMENTS

Below, preferred embodiments of the present invention are explained with reference to the accompanying drawings.

### First Embodiment

In the present embodiment, when recording data onto an optical data recording medium, for example, an optical disk, the recording operation is interrupted at a specified time for a while, and the recording state right before the interruption is then read out from the optical disk; the result is fed back to correct power of a laser, and the next recording operation is performed with the corrected power of the laser. In this way, the power of a laser is appropriately adjusted in the recording operation.

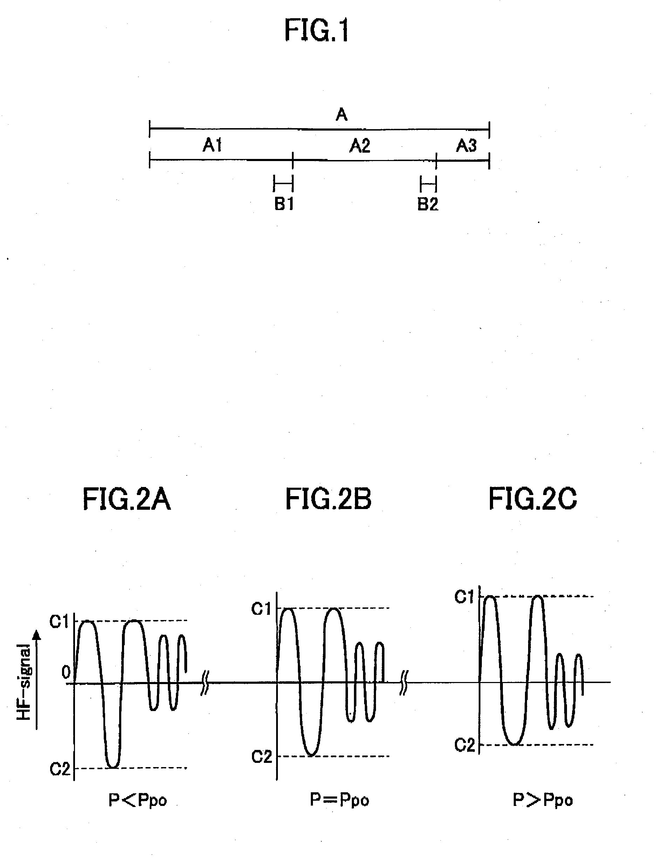

FIG. 1 is a schematic view of a configuration of the optical disk in the first embodiment of the present invention.

In FIG. 1, letter "A" indicates the recording area of the optical disk, and the recording area A is divided into three regions A1, A2, and A3. During recording, after recording data onto the region A1, the recording operation is interrupted temporarily, and the RF signal recorded to the end of the A1 region, or a place close to the end of the A1 region (indicated by B1), is read out by an optical pick-up, and the asymmetry of the RF signal is measured.

Asymmetry of a signal is represented by a parameter $\beta$, defined to be $\beta=(C1+C2)/(C1-C2)$, where C1 and C2 represent a peak level and a bottom level, respectively, of the RF signal obtained through AC coupling.

FIGs. 2A through 2C are examples showing behavior of the parameter $\beta$ expressing asymmetry of the reproduced RF signal.

In FIG. 2A, C1 < C2, and $\beta$ < 0. In this case, the recording power P is less than the optimum recording power Ppo. In FIG. 2B, since C1 = C2, $\beta$ = 0. In this case, the recording power P equals the optimum recording power Ppo. In FIG. 2C, since C1 > C2, $\beta$ > 0. In this case, the recording power P is greater than the optimum recording power Ppo.

As shown in FIG. 2B, ideally, the recording power P that makes $\beta$ of the RF signal zero is the optimum recording power Ppo. However, because of the characteristics of the optical pickup in the optical system, the value of the parameter $\beta$ is not zero, moreover, $\beta$ is not even a constant when the recording power P becomes the optimum recording power Ppo. Therefore, an object value (T) of $\beta$ that makes the recording quality best is determined beforehand, and the recording power is determined so that the value of $\beta$ actually measured equals the object value of $\beta$.

Next, when recording data to the region A2, the difference between the measured value and the object value of $\beta$ is calculated; this difference multiplied by a gain factor G is fed back for control of the power of the laser (below, denoted as LD power). After the LD power is adjusted by compensating for the difference between the measured value and the object value of $\beta$, the resultant new LD power Pw[i+1] is expressed by the following formula.

$$Pw[i+1]=Pw[i]+G(T-\beta) \qquad (1)$$

Where, Pw[i+1] represents the next LD power level, Pw[i] represents the present LD power, G is the gain factor, and T and $\beta$ are the object value of $\beta$ and the measured value, respectively.

With the corrected LD power, recording in the A2 region is performed, the recording operation is interrupted again, and then after the LD power is corrected as described above, recording in the A3 region is performed.

In the above, although it is assumed that the recording area A is divided into three regions, according to the procedure described below, the method of the present embodiment is applicable to the case involving four or more recording regions.

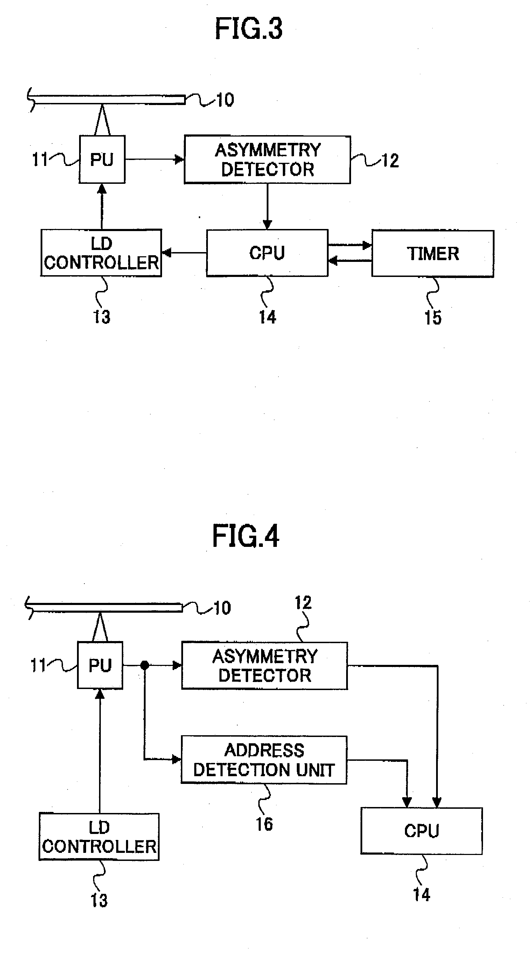

FIG. 3 is a view of an example of a configuration of an optical data recording device according to the first embodiment of the present invention.

The optical data recording device shown in FIG. 3 includes an optical disk 10, an optical pickup (PU) 11 for recording data to and reproducing data from the optical disk 10, an asymmetry detector 12 for measuring asymmetry parameter $\beta$ of a reproduced signal (for example, a RF signal) output from the optical pickup PU 11, an LD controller 13 for controlling the laser (LD) installed in the optical pickup PU 11, a central processing unit (CPU) 14 for controlling the overall operation of the optical data recording device of the first embodiment, and a timer 15.

The optical disk 10 is an example of the optical data recording medium of the present invention, for example, it may be a WORM (write once read many) type optical disk, such as a CD-R, DVD-R, or other readable optical disk.

Below, the method of the present embodiment is described for recording data onto the optical disk 10.

When starting to record data to the optical disk 10, through the LD controller 13, CPU 14 controls the LD installed in the optical pickup 11 to emit light at different LD power levels successively so that the optical pickup 11 writes trial data into the trial recording region of the optical disk 10, and CPU 14 controls the optical pickup 11 to read the trial data in the trial recording region written at each LD power level, and obtains RF signals from the optical pickup 11 corresponding to the trial data in the trial recording region written at different LD power levels. CPU 14 controls the asymmetry detector 12 to measure the asymmetry parameter (β) of the RF signals; from the measured values of the asymmetry parameter (β) at different LD power levels, CPU 14 calculates the LD power resulting in the object asymmetry parameter T.

The optical disk 10 is driven to rotate by a not-illustrated spindle motor. The optical pickup 11 directs a laser beam emitted from the LD with a specified recording power to the optical disk 10 through an optical system including an object lens; the optical pickup 11 focuses the laser beam to form a light spot on the optical disk 10, thereby to record data on the optical disk 10.

On the other hand, the optical pickup 11 directs a laser beam emitted from the LD with a specified reproduction power to the optical disk 10 through the optical system including the object lens to form a light spot on the optical disk 10, and a light sensor receives the light reflected from the optical disk 10 through the optical system including the object lens, thereby to reproduce the obtained signals, such as RF signals.

After CPU 14 calculates the LD power at the beginning of data recording, the LD controller 13, controlled by CPU 14, uses a modulation signal, for example, a multi-pulse signal, to drive the LD in the optical pickup 11 to emit a laser beam having the obtained LD power. Therefore, the optical pickup 11 starts to record data from the beginning of the actual data recording region (region A in FIG. 1) of the optical disk 10. At the same time, CPU 14 sets a predetermined value in the timer 15 as a recording time period, and starts the timer 15 to count the time. Then, during one recording operation, CPU 14 monitors the timer 15 to check whether the count of the timer 15 reaches the preset value.

When the count reaches the preset value, CPU 14 interrupts the recording operation and stops the timer 15. The region recorded so far corresponds to the region A1 in FIG. 1.

After the interruption, CPU 14 controls to reproduce the data recorded in the region B1 at the end of the region A1 by the optical pickup 11, and then the asymmetry detector 12 measures the asymmetry parameter (β) of the RF signal from the optical pickup 11. Below, this operation is described in detail.

First, CPU 14 controls a not-illustrated seek motor, which is able to move the optical pickup 11 along a radial direction of the optical disk 10, to locate the starting position of the region B1, and controls the optical pickup 11 to read data in the region B1.

Then, the optical pickup 11 outputs the RF signal reproduced from the region B1, and then the asymmetry detector 12 measures the asymmetry parameter (β) of the RF signal.

From the asymmetry parameter (β) obtained by the asymmetry detector 12, CPU 14 calculates the optimum LD power Popt2 for the next region A2 by using formula (1) described above, and sets Popt2 as the next recording power in the LD controller 13. In this way, the LD power is corrected.

Next, CPU 14 controls the seek motor to locate the starting position of the region A2, and controls the optical pickup 11 to start to record data in the region A2. At the beginning of data recording, CPU 14 sets a predetermined value in the timer 15 as the next recording time period and starts the timer 15 to count the time.

Then, the operations described above are repeated, and thereby, the data recording is performed at appropriate LD power levels all over the region A.

Below, the size of the region recorded each time (that is, the amount of data continuously recorded in one recording operation) on the optical disk 10 is described.

In the present embodiment, the size of a recording region where data are continuously recorded without any interruption in one recording operation, such as regions A1, A2, and A3, is determined so that recording quality is not affected by changes of the LD efficiency, the LD wavelength, and the sensitivity of the recording film of the optical disk 11 caused by temperature rising.

If the LD temperature fluctuation is dominant compared with the sensitivity fluctuation of the recording film, the time required for completing recording of the predetermined amount of data, which can be continuously recorded without any interruption in one recording operation, such as data recorded in regions A1, A2, and A3, may be set to be sufficiently short compared with the time period over which recording quality declines due to the LD temperature rising, and the recording operation may be interrupted after continuous recording for the preset time period.

The optical data recording device of the present embodiment shown in FIG. 3 is capable of performing such kind of recording. For example, the recording operation may be interrupted after continuous recording for 10 seconds, and then the asymmetry parameter β is measured and the LD power is corrected as described above.

If the sensitivity fluctuation of the recording film is dominant compared with the LD temperature fluctuation, as described in detail in the second embodiment, the recording operation may be interrupted after continuous recording for a certain length along the radial direction of the optical disk 10, for example, a few millimeters, and then the asymmetry parameter β is measured and the LD power is corrected as described above.

In the case of CLV recording (Constant Linear Velocity), the amounts of data recorded in the inner area and in the peripheral area of the optical disk 10 are different even if the same time information is recorded, for example, the recording operation may be interrupted after continuous data recording for 2 millimeters along the radial direction of the optical disk 10, and then the asymmetry parameter β is measured and the LD power is corrected as described above.

In the present embodiment, the LD power pw is corrected by measuring the asymmetry parameter β. In the case of an optical disk formed from a phase change material, instead of the asymmetry parameter β, the recording power pw may also be corrected based on measurement results of modulation of a reproduced RF signal from the optical pickup 11.

According to the present embodiment, when a specified amount of data is recorded onto the optical disk 10 continuously by using a laser beam, the recording operation is interrupted, and the recording state (for example, asymmetry parameter β, or modulation of a RF signal output from the optical pickup 11) right before the interruption is read out from the optical disk 10. Based on this result, the recording power of the laser for the next recording operation is corrected, and the next recording operation is performed with the corrected recording power. In this way, even when a multi-pulse driving signal is used, it is possible to maintain the recording power of the laser to be an optimum value, and high recording quality is obtainable all over the optical disk 10.

In the recording operation, the specified amount of data to be recorded is determined so that the time required for completing recording of the specified amount of data is sufficiently short compared with the time period over which recording quality declines due to LD temperature rising. Therefore, even when the LD temperature fluctuation is a predominant factor causing reduction of the recording quality, it is possible to maintain the recording power of the laser to be an optimum value, and high recording quality is obtainable all over the optical disk 10.

Since the recording state is obtained by measuring asymmetry of a reproduced signal, even when a multi-pulse driving signal is used to record data to a WORM (write once read many) type optical recording medium, such as a CD-R, or DVD-R, it is possible to maintain the recording power of the laser to be an optimum value, and high recording quality is obtainable all over the optical disk 10.

Since the recording state may also be obtained by measuring modulation of a reproduced signal, even when a multi-pulse driving signal is used to record data to a rewritable optical recording medium, such as a CD-RW, or DVD-RW, it is possible to maintain the recording power of the laser to be an optimum value, and high recording quality is obtainable all over the optical disk 10.

In the optical data recording device of the present embodiment, the asymmetry detector 12, corresponding to the recording state measurement unit of the present invention, measures the recording state of the optical disk 10. Based on the measurement result, CPU 14, having the functions of the recording power calculation unit of the present invention, calculates the recording power for the next recording operation. The LD controller 13, corresponding to the laser control unit of the present invention, controls the laser to perform the next recording operation with the corrected recording power. CPU 14, also having the functions of the recording control unit of the present invention, interrupts the recording operation when a specified amount of data is recorded continuously onto the optical disk 10, and the asymmetry detector 12 and CPU 14 measures the recording state of the optical disk 10 right before the interruption. Based on the measurement results, CPU 14 restarts the recording operation in the optical disk 10 immediately after the interruption with the corrected recording power.

With the above configuration, even when a multi-pulse driving signal is used, it is possible to maintain the recording power of the laser to be an optimum value, and high recording quality is obtainable all over the optical disk 10.

Second Embodiment

FIG. 4 is a view of an example of a configuration of an optical data recording device according to the second embodiment of the present invention.

In the present embodiment, the optical data recording device records a specified amount of data each time to cover a specified length along the radial direction of the optical disk, and then measures the asymmetry parameter β to correct the power of the laser.

Below, the same numeral references are used for the same elements of the optical data recording device as those in the first embodiment, and overlapping descriptions are omitted.

The optical data recording device according to the present invention basically has the same configuration as that of the first embodiment as shown in FIG. 1, except that timer 15 in the first embodiment is replaced by an address detection unit 16.

The address detection unit 16 detects an address in the optical disk 10 from a wobbling signal, or other signals including information address information, which are read from the optical disk 10 and output by the optical pickup 11.

Below, the differences between the first embodiment and the present embodiment in recording operation are explained.

When starting to record data to the optical disk 10, CPU 14 records a recording starting address (adrs1), and then calculates an address (adrs2) at a predetermined length (w, in millimeters) from the recording starting address adrs1 along the radial direction of the optical disk 10. The predetermined length w is also referred to as a width along the radial direction of the optical disk 10.

In other words, if recording data from a position having the recording starting address adrs1 to a position having the address adrs2 and then the recording is interrupted, the length between the two positions in the radial direction of the optical disk 10 is w. Alternatively stated, if recording data from a position having the recording starting address adrs1, and continuing the recording while advancing in the radial direction of the optical disk 10 by a length w and then the recording is interrupted, the final position has the address adrs2.

In the present embodiment, the length w is the distance along the radial direction of the optical disk 10 covered by the amount of data recorded in one recording operation, and the length w is set to be sufficiently short compared with the length over which recording quality declines due to fluctuation of the sensitivity of the recording film.

During one recording operation, CPU 14 monitors the address detection unit 16 to determine whether the address output by the address detection unit 16 is adrs2. When the address output by the address detection unit 16 becomes adrs2, CPU 14 interrupts the recording operation of the optical pickup 11. Then the asymmetry parameter β is measured and the LD power is corrected in the same way as described in the first embodiment, and recording operation in the next region of the optical disk 11 is started.

Below, measurement of the asymmetry parameter β is described in detail.

When measuring the asymmetry parameter β, usually, it is necessary to interrupt the recording operation for a while and to find the starting position of the region B1 (FIG. 1) by the seek motor (this is called seek for β measurement), and to find the starting position of the next region (this is called seek for recording), that is, the region A2, after measurement of β. However, in this way, position location has to be performed twice between the region A1 and the region A2, and it costs time.

When performing the seek for recording, since recording quality changes with the recording linear velocity of the optical disk 10, it is necessary to search the recording region up to the object address and then to confirm if the linear velocity of the optical disk 10 becomes the object linear velocity. In other words, it is necessary to wait until the revolutions per minute (RPM) of the spindle motor reaches the object RPM near the object address.

If the parameter β is measured in this waiting period for setting the linear velocity until the RPM of the spindle motor reaches the object RPM, the aforesaid seek for B measurement can be omitted, thus the time period of recording interruption can be shortened, and therefore, the recording time can be shortened.

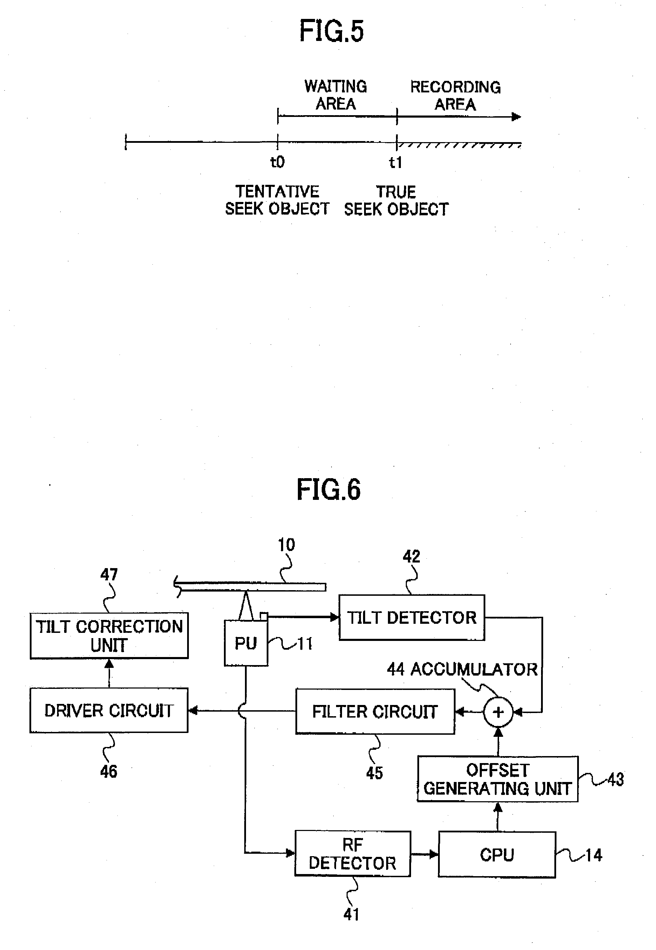

FIG. 5 is a diagram explaining the principle of the recording method related to the second embodiment.

In FIG. 5, the symbol t1 indicates an object starting recording address, that is, it is desired to start data recording at t1. In order to record data from the starting recording address t1, CPU 14 drives the seek motor to seek a tentative object t0. Afterwards, CPU 14 waits until the RPM of the spindle motor becomes the object RPM in the region between t0 and t1 and then stops seeking. If the seek motor reaches t1 before the RPM of the spindle motor becomes the object RPM in the region, CPU 14 drives the seek motor to seek the tentative object t0 again, and waits again until the RPM of the spindle motor becomes the object RPM in the region between t0 and t1.

CPU 14 measures the parameter β and corrects the LD power in this waiting period, and then proceeds to the next recording. Therefore, it is sufficient to perform position location only once during interruption of the recording operation.

Since the parameter β is measured in local areas on the optical disk 10, if the measurement points happen to be in regions having defects, the measured value of the parameter β may be greatly different from the actual value (that is, the parameter β in regions having no defects). If such a measured value is directly used to correct the LD power, the result will be improper, and the recording quality will be degraded.

Because the LD temperature and the sensitivity of the recording film of the optical disk 10 do not change drastically in a recording region whose size is properly set, if data recording is performed in the region A1 at an appropriate recording power (pw1), the recording power (pw2) for recording in the region A2 is never too different from pw1.

Therefore, CPU 14 may impose restrictions on the recording power pw2 in the region A2 by using the recording power pw1 in the region A1, and thereby, it is possible to prevent setting a wrong recording power due to local defects on the optical disk 10.

For example, CPU 14 requires that the difference between the preceding LD power pw1 and the following LD power pw2 be within ± 0.1 mW. With this restriction, even if there are defects on the optical disk 10 and a wrong measurement value of the parameter β is obtained, the recording quality does not degrade too much with this one wrong correction of the recording power.

In the present embodiment, the LD power pw is corrected by measuring the asymmetry parameter β. In the case of an optical disk formed from a phase change material, instead of the asymmetry parameter β, the recording power pw may be corrected based on measurement results of modulation of a reproduced RF signal from the optical pickup 11.

According to the present embodiment, when recording a specified amount of data onto an optical disk continuously by using a laser beam, the recording operation is interrupted at a specified position or time for a while, and the recording state (for example, asymmetry parameter β, or modulation of a RF signal output from the optical pickup 11) right before the interruption is read out from the optical disk 10. Based on this result, the recording power of the laser for the next recording operation is corrected, and the next recording operation is performed with the corrected recording power. In this way, even when a multi-pulse driving signal is used, it is possible to maintain the recording power of the laser to be an optimum value, and high recording quality is obtainable all over the optical disk 10.

In the recording operation, the specified amount of data to be recorded is determined so that the length along the radial direction of the optical disk 10 covered by the specified amount of data is sufficiently short compared with the length over which recording quality declines due to fluctuation of the sensitivity of the recording film. Therefore, even when fluctuation of the sensitivity of the recording film of the optical disk 10 is a predominant factor causing reduction of the recording quality, it is possible to maintain the recording power of the laser to be an optimum value, and high recording quality is obtainable all over the optical disk 10.

Because measurement of the recording state is performed during a period of seek for recording, the time period of recording interruption can be shortened, hence the recording time can be shortened.

By restricting the amount of correction of the recording power in one correction operation, even if there are defects in the recording region of the optical disk 10 and a wrong measurement value of the parameter β is obtained, the recording quality does not degrade too much with this one correction, therefore, it is possible to obtain stable recording quality.

Since the recording state is obtained by measuring asymmetry of a reproduced signal, even when a multi-pulse driving signal is used to record data to a WORM (write once read many) type optical recording medium, such as a CD-R, or DVD-R, it is possible to maintain the recording power of the laser to be an optimum value, and high recording quality is obtainable all over the optical disk 10.

Since the recording state may also be obtained by measuring modulation of a reproduced signal, even when a multi-pulse driving signal is used to record data to a rewritable optical recording medium, such as a CD-RW, or DVD-RW, it is possible to maintain the recording power of the laser to be an optimum value, and high recording quality is obtainable all over the optical disk 10.

Third Embodiment

FIG. 6 is a view of a configuration of an optical data recording device according to the third embodiment of the present invention. Below, the same numeral references are used for the same elements of the optical data recording device as those in the previous embodiment, and overlapping descriptions are omitted.

The optical data recording device shown in FIG. 6 includes an optical disk 10, an optical pickup (PU) 11 for recording data to and reproducing data from the optical disk 10, a central processing unit (CPU) 14 for controlling the overall operation of the optical data recording device of the present embodiment, a RF detector 41 for measuring the amplitude of a RF signal output from the optical pickup 11, a tilt detector 42 for measuring a tilt of the optical disk 10 from the signal (for example, the RF signal) output from the optical pickup 11 and generating a tilt error (TIE) signal, an offset generating unit 43 for generating a voltage corresponding to an offset according to a preset value, an accumulator 44 for summing the TIE signal from the tilt detector 42 and the output signal from the offset generating unit 43, a filter circuit 45 that corrects the signal output from the accumulator 44 for gain compensation and phase compensation of a tilt servo system, a tilt correction unit 47 for correcting the tilt of the optical disk 10, and a driver circuit 46 for driving the tilt correction unit 47 according to the signal output from the filter circuit 45.

The tilt detector 42, the offset generating unit 43, the accumulator 44, the filter circuit 45, the tilt correction unit 47, and the driver circuit 46 constitute the tilt servo system, corresponding to the tilt correction system of the present invention.

In the optical data recording device of the third embodiment as shown in FIG. 6, the tilt detector 42 measures the tilt of the optical disk 10 from the RF signal output from the optical pickup 11 and generates the TIE signal; the accumulator 44 adds the TIE signal from the tilt detector 42 and the output signal from the offset generating unit 43. The filter circuit 45 corrects the signal output from the accumulator 44 to perform gain compensation and phase compensation of the tilt servo system. The driver circuit 46 drives the tilt correction unit 47 according to the signal output from the filter circuit 45 to correct the tilt of the optical disk 10. In this way, the tilt of the optical disk 10 is corrected so that the signal output from the filter circuit 45 becomes zero.

Usually, because of the specific characteristics of the optical pickup 11, the tilt of the optical disk 10 resulting in optimum reading quality is somewhat different from the tilt when the TIE signal from the tilt detector 42 becomes zero, but the tilt of the optical disk 10 resulting in the optimum reading quality is in agreement when the amplitude of the RF signal output from the optical pickup 11 is a maximum.

In order to obtain an offset for correcting the tilt so that the reading quality is optimized, for example, CPU 14 sets a sequence of offset values from a lower limit to an upper limit into the offset generation unit 43, reads in amplitudes of the RF signals corresponding to these offset values from the RF detector 41, selects the offset value related to the maximum amplitude of the RF signal, and stores the offset value as an offset of the tilt of the optical disk 10 causing optimum reading quality. This offset is indicated by offset_R. Usually, this operation is performed before shipment or during a mounting process of the optical data recording device.

Furthermore, in a recording operation, the tilt of the optical disk 10 related to optimum recording quality is usually different from that related to the optimum reading quality, and the former equals a value obtained by shifting the latter appropriately.

CPU 14 stores the offset value shifted by a certain value from the tilt related to the optimum reading quality. This stored offset is indicated by offset_W. That is,

$$offset\_W = offset\_R + \alpha$$

where, $\alpha$ is a constant.

Similarly, this operation is performed before shipment of the optical data recording device or when a mounting the optical disk 10.

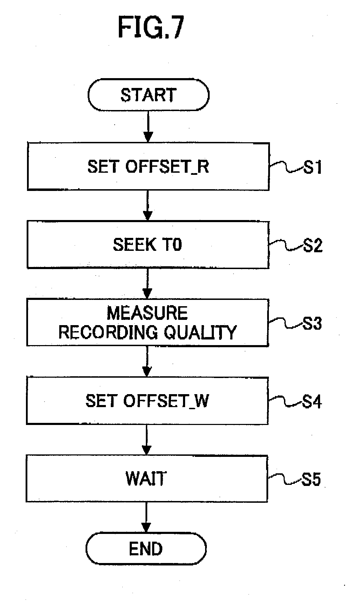

Below, with a reference to FIG. 7, an explanation is made of the seek operation for measuring recording quality (or recording state) prior to interruption of a recording operation.

FIG. 7 is a flowchart showing the seek operation for measuring recording quality (or recording state) prior to interruption of a recording operation in the third embodiment.

In step S1, at the beginning of a seek operation, CPU 14 sets the tilt offset offset_R of the optical disk 10 into the offset generation unit 43. This setting of the tilt offset ensures that reading quality of the optical disk 10 is optimum.

In step S2, CPU 14 drives a seek motor to locate a tentative seek object t0.

In step S3, CPU 14 measures the recording quality (for example, asymmetry $\beta$ of the RF signal from the optical pickup 11) from the amplitude of the RF signal output from the RF detector 41.

In step S4, CPU 14 sets the tilt offset offset_W of the optical disk 10 into the offset generation unit 43. This setting of the tilt offset ensures that the recording quality of the optical disk 10 is optimum.

In step S5, CPU 14 waits while the spindle motor is revolving.

By setting the tilt offset of the optical disk 10 in this way, when reading the recording quality, the reading quality is an optimum. Usually, the reading operation in the trial writing region during OPC is performed with the reading quality being optimized. Therefore, according to the present embodiment, because the recording quality is read under the same condition with the reading operation in the trial writing region, determination of the LD power is performed under the same condition with OPC, furthermore, it is not necessary to perform a seek operation for reading the recording quality, and the time period of recording interruption can be shortened, and therefore, the recording time can be shortened.

According to the present embodiment, during seek for measuring the recording quality, the offset for correction of tilt of the optical disk 10 is set so that the reading quality is optimized, and after measuring the recording quality, the offset for correction of tilt of the optical disk 10 is set so that the recording quality is optimized, the tilt offset when measuring the recording quality is the same as that when reading data in the trial writing region, and setting of the offset for tilt correction can be optimized. Further, the LD power resulting in optimum recording quality is determined based on the above results, and it is possible to maintain high recording quality throughout the recording region immediately after OPC.

Fourth Embodiment

This embodiment relates to an optical data processing device including any one of the optical recording devices in the previous embodiments.

With such a device, even when a multi-pulse driving signal is used, it is possible to maintain the recording power of the laser to be an optimum value, and high recording quality is obtainable all over the optical data recording medium.

In the first and the second embodiments, the recording operation is interrupted at a specified position or time for a while, and the recording state right before the interruption is read out. Based on this result, the recording power for the next recording operation is corrected. Further, because measurement of the recording state is performed during a recording seek period after the interruption of the recording operation, the time period of recording interruption and the total recording time are shortened.

Usually, the seek operation in reading is used for reading the recording state in OPC. In this reading seek operation, various settings are performed so that the reading quality is optimized. In OPC, with the reading quality being optimized, data in the trial recording region is read, and the recording power of the laser resulting in optimum recording quality is obtained.

On the other hand, the seek operation in writing is used for recording. In this recording seek operation, various settings are performed so that the recording quality is optimized. Here, the settings include settings of focus and offset of the tilt of the optical disk. Therefore, in general, in a seek operation in recording, the reading quality when reading the preceding recording state is different from the reading quality when reading the recording state of the trial recording region in OPC.

As a result, if the LD power is corrected based on data read in the seek operation for recording, the corrected LD power ends up being different from the LD power immediately after OPC, thus, the recording quality in the two stages differ from each other.

In general, in OPC, the LD power is set so that the recording quality is optimized. With the LD power determined by ROPC as described above, the recording quality declines compared with that right after OPC.

Fifth Embodiment

In this embodiment, in the seek operation for reading the preceding recording state, setting for optimizing the reading quality is performed before reading of the recording state; and after reading the recording state, setting for optimizing the recording quality is performed.

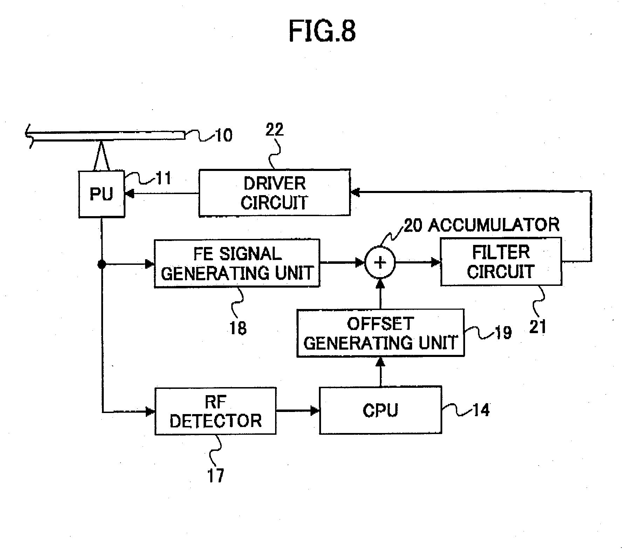

FIG. 8 is a view of a configuration of an optical data recording device according to the fifth embodiment of the present invention. Below, the same numeral references are used for the same elements as those in the first embodiment, and overlapping descriptions are omitted.

The optical data recording device shown in FIG. 8 includes an optical disk 10, an optical pickup (PU) 11 for recording data to and reproducing data from the optical disk 10, a central processing unit (CPU) 14 for controlling the overall operation of the optical data recording device of the present embodiment, a RF detector 17 for measuring the amplitude of a RF signal output from the optical pickup 11, a focusing error (FE) signal generating unit 18 for generating a focusing error (FE) signal from the signal output from the optical pickup 11, an offset generating unit 19 for generating a voltage corresponding to an offset according to a preset value, an accumulator 20 for summing the FE signal from the FE signal generating unit 18 and the output signal from the offset generating unit 19, a filter circuit 21 that corrects the signal output from the accumulator 20 for gain compensation and phase compensation of a focusing servo system, and a driver circuit 22 for driving a not-illustrated focusing actuator installed in the optical pickup 11 according to the signal output from the filter circuit 21. The focusing actuator moves an object lens of the optical pickup 11 in the focusing direction.

In this embodiment, the focusing position of the object lens is controlled in the focusing direction so that the signal output from the filter circuit 21 becomes zero. Usually, because of the specific characteristics of the optical pickup 11, the focusing position resulting in optimum reading quality is somewhat different from the focusing position when the FE signal from the FE signal generating unit 18 becomes zero, but the focusing position resulting in the optimum reading quality is in agreement when the amplitude of the RF signal output from the optical pickup 11 is a maximum.

In order to obtain the focusing position resulting in optimum reading quality, for example, CPU 14 sets a sequence of offset values from a lower limit to an upper limit into the offset generation unit 19, reads in amplitudes of the RF signals corresponding to these offset values from the RF detector 17, selects the offset value related to the maximum amplitude of the RF signal, and stores the offset value as an offset of the focus of the optical disk 10 causing optimum reading quality. This offset is indicated by offset_R.

Furthermore, in a recording operation, the focus position related to optimum recording quality is usually different from that related to the optimum reading quality, and the former equals a value obtained by shifting the latter appropriately. That is, the focus offset (offset_W) related to the optimum recording quality in a recording operation satisfies:

$$offset\_W = offset\_R + \alpha$$

where, $\alpha$ is a constant.

CPU 14 stores the focus offset value offset_W related to the optimum recording quality.

This operation is usually performed in a mounting process of the optical disk 10.

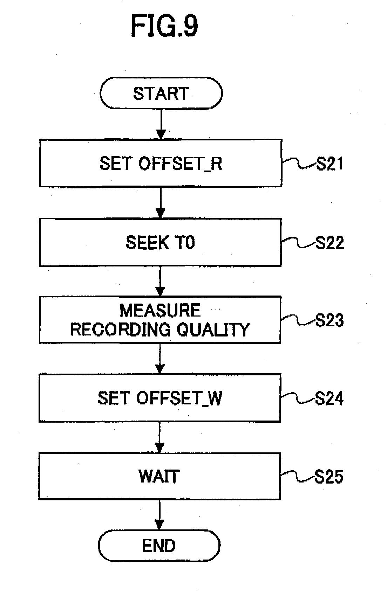

Below, with a reference to FIG. 9, an explanation is made of the seek operation for measuring recording quality (or recording state) prior to interruption of a recording operation.

FIG. 9 is a flowchart showing the seek operation for measuring recording quality (or recording state) prior to interruption of a recording operation in the fifth embodiment.

In step S21, at the beginning of a seek operation, CPU 14 sets offset_R of the optical disk 10 into the offset generation unit 18. This setting ensures that the reading quality of the optical disk 10 is optimum.

In step S22, CPU 14 drives a seek motor to locate a tentative seek object t0.

In step S3, CPU 14 measures the recording quality (for example, asymmetry $\beta$ of the RF signal from the optical pickup 11) from the amplitude of the RF signal output from the RF detector 17.

In step S4, CPU 14 sets offset_W of the optical disk 10 into the offset generation unit 19. This setting ensures that the recording quality of the optical disk 10 is optimum.

In step S5, CPU 14 waits while the spindle motor is revolving.

By setting the focus offset of the optical disk 10 in this way, when reading the recording quality, the reading quality is an optimum. Usually, the reading operation in the trial writing region during OPC is performed with the reading quality being optimized. Therefore, according to the present embodiment, because the recording quality is read under the same condition as the reading operation in the trial writing region, determination of the LD power is performed under the same condition as that in OPC. Furthermore, it is not necessary to perform a seek operation for reading the recording quality, and the time period of recording interruption can be shortened. Therefore, the recording time can be shortened.

According to the present embodiment, when a specified amount of data is recorded onto the optical disk 10 continuously by using a laser beam, the recording operation is interrupted, and the recording state right before the interruption is read out from the optical disk 10 to measure the recording quality. Based on this result, the recording power of the laser for the next recording operation is corrected, and the next recording operation is performed with the corrected recording power.

This measurement of the recording quality is performed during the seek operation when recording is restarted after the interruption of the recording operation. During this seek operation, when measuring the recording quality, setting is performed so that the reading quality is an optimum. After measuring the recording quality, setting is performed so that the recording quality is an optimum. The condition of measurement of the recording quality is the same as that when reading data in the trial writing region. Further, the LD power resulting in the optimum recording quality is determined based on the above results, and it is possible to maintain high recording quality throughout the optical disk 10 immediately after OPC.

During the seek operation when measuring the recording quality, the offset of the focus position of the focus servo is set so that the reading quality is an optimum. After measuring the recording quality, the offset of the focus position is set so that the recording quality is an optimum. Therefore, the focus position condition of measurement of the recording quality is the same as that when reading data in the trial writing region. Further, the LD power resulting in the optimum recording quality is determined based on the above results, therefore, it is possible to maintain high recording quality throughout the optical disk 10 immediately after OPC.

In the optical data recording device of the present embodiment, CPU 14 and the RF detector 17, having the functions of the recording state measurement unit of the present invention, measure the recording state of the optical disk 10 and recording quality. Based on the measurement result, CPU 14, having the functions of the recording power calculation unit of the present invention, calculates the recording power for the next recording operation. The LD controller 13, corresponding to the laser control unit of the present invention, controls the laser to perform the next recording operation with the corrected recording power. CPU 14, also having the functions of the recording control unit of the present invention, interrupts the recording operation when a specified amount of data is recorded continuously onto the optical disk 10, and the RF detector 17 and CPU 14 measure the recording state of the optical disk 10 just before the interruption to measure the recording quality. Based on the measurement results, CPU 14 re-starts the recording operation in the optical disk immediately after the interruption with the specified recording power. CPU 14, also having the functions of the focus position offset setting unit of the present invention, further adjusts the offset of the focus position of the focus servo.

With the above configuration, during the seek operation when measuring the recording quality, the offset of the focus position of the focus servo is set so that the reading quality is an optimum. After measuring the recording quality, the offset of the focus position is set so that the recording quality is an optimum. Therefore, it is possible to maintain high recording quality throughout the optical disk 10 immediately after OPC.

Sixth Embodiment

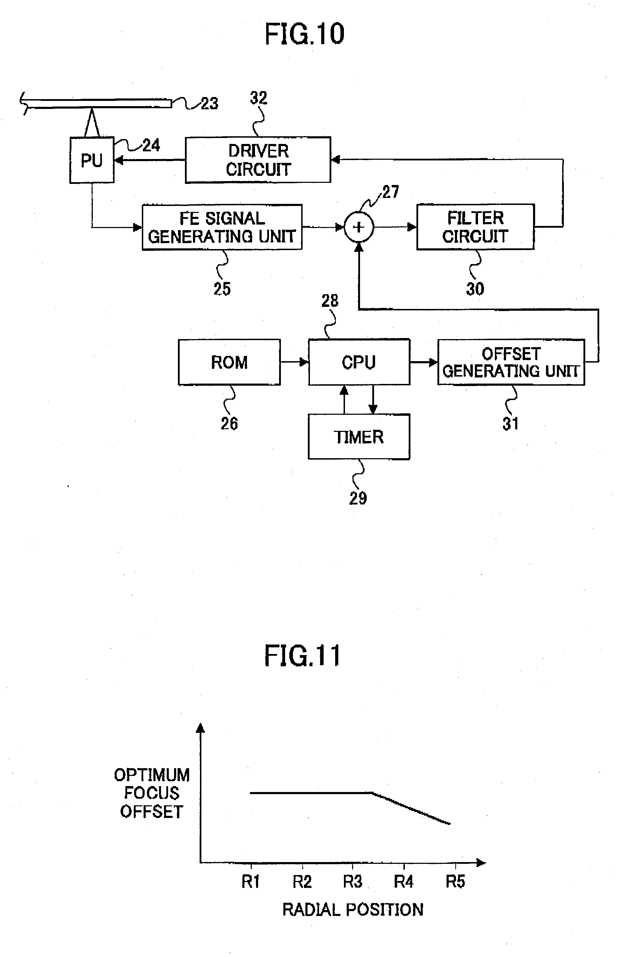

FIG. 10 is a view of a configuration of an optical data recording and reproducing device according to the sixth embodiment of the present invention.

The optical data recording and reproducing device shown in FIG. 10 includes an optical disk 23, an optical pickup (PU) 24 for recording data to and reproducing data from the optical disk 23, a focusing error (FE) signal generating unit 25 for generating a focusing error (FE) signal from the signal output from the optical pickup 24, a ROM 26 that stores focus offset data corresponding to optimum recording quality or reproducing quality at a number of positions on the optical disk 23 at equal intervals and different radii, an offset generating unit 31 for generating a voltage corresponding to an offset according to a preset value, an accumulator 27 for summing the FE signal from the FE signal generating unit 25 and the output signal from the offset generating unit 31, a central processing unit (CPU) 28 for controlling the overall operation of the device of the present embodiment, a timer 29, a filter circuit 30 that corrects the signal output from the accumulator 27 for gain compensation and phase compensation of a focusing servo system, and a driver circuit 32 for driving a not-illustrated focusing actuator installed in the optical pickup 24 according to the signal output from the filter circuit 30.

The focusing actuator moves an object lens of the optical pickup 11 in a focusing direction. The optical pickup 24 directs a laser beam with a specified power emitted from a laser installed therein to the optical disk 23 through an optical system including an object lens, the optical pickup 11 focuses the laser beam to form a light spot on the optical disk 23, thereby to record data on the optical disk 23.

On the other hand, the optical pickup 24 directs a laser beam emitted from the LD with a specified reproduction power to the optical disk 23 through the optical system including the object lens to form a light spot on the optical disk 23, and a light sensor receives the light reflected from the optical disk 23 through the optical system including the object lens, thereby to reproduce the obtained signals, such as RF signals.

In this embodiment, the focusing position of the object lens is controlled in the focusing direction so that the signal output from the filter circuit 30 becomes zero. Usually, because of the specific characteristics of the optical pickup 24, the focusing position resulting in optimum reading quality is somewhat shifted from the focusing position when the FE signal from the FE signal generating unit 25 becomes zero. Due to the characteristics of the optical disk 23 and the reproduction device of the embodiment, this shift may change with the radial position (that is, position along the radial direction).

FIG. 11 is a graph showing a relation between an optimum focus offset and the radial position of the optical disk 23. Here, the optimum focus offset is an offset of the focus resulting in optimum focusing condition.

As shown in FIG. 11, in the peripheral region of the optical disk 23, the offset resulting in optimum focusing decreases, and a large shift along the focusing direction is required.

CPU 28 reads data stored in ROM 26 corresponding to the recording or reproducing radial position on the optical disk 23, and sets this offset data to the offset generating unit 31. The accumulator 27 adds the offset value from the offset generating unit 31 to the FE signal from the FE signal generating unit 25, and outputs the offset FE signal to the filter circuit 30. Therefore, the focusing position of the object lens in the focusing direction is adjusted to a position shifted by an offset output by the offset generating unit 31 from the position where the FE signal becomes zero.

Data reflecting the relation, as shown in FIG. 11, between the offset resulting in optimum quality in recording or reproduction and the radial position on the optical disk 23 are measured and stored in ROM 26 in advance. For example, before shipment of products, recording or reproduction is performed while offsetting the focusing position, and the offset of the focusing position resulting in the optimum recording or reproducing quality is measured at different radii on the optical disk.

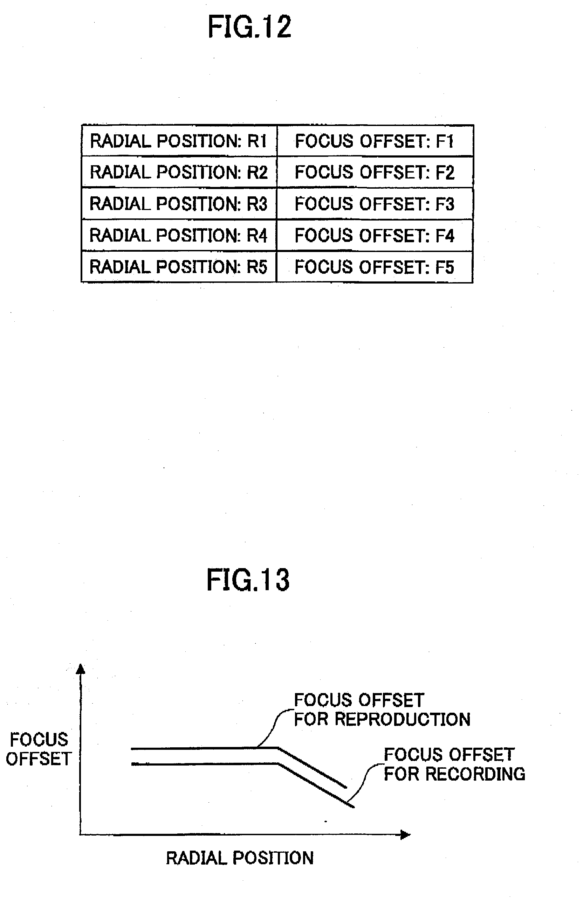

FIG. 12 is a table showing an example of the measured optimum focus offset at different radii. For example, the measured data are stored to ROM 26 in the form of the table in FIG. 12.

Data of offsets resulting in optimum reproducing quality and those resulting in optimum recording quality may be measured separately and placed in two tables (reproduction table and recording table).

The focus offset resulting in optimum reproducing quality can be measured by the following methods. The first method involves reproducing data on the optical disk 23 while changing the focus offset, and measuring the jitter of the RF signal for each focus offset to find the focus offset resulting in the smallest jitter. The second method involves reproducing data on the optical disk 23 while changing the focus offset, and measuring the amplitude of the RF signal for each focus offset to find the focus offset resulting in the largest amplitude.

The focus offset resulting in optimum recording quality can be measured by the following methods. The first method involves recording data onto the optical disk 23 while changing the focus offset, and measuring the jitter of the RF signal for each focus offset to find the focus offset resulting in the smallest jitter. The second method involves recording data onto the optical disk 23 while changing the focus offset, and measuring the amplitude of the RF signal for each focus offset to find the focus offset resulting in the largest amplitude.

Generally, the focus offset resulting in the optimum reproducing quality and the focus offset resulting in the optimum recording quality are different from each other. For this reason, in an optical disk device for recording data to and reproducing data from an optical disk, two offset data tables, that is, the production table and the recording table become necessary.

FIG. 13 contains graphs showing the focus offset resulting in the optimum reproducing quality and the focus offset resulting in the optimum recording quality, for example, obtained with the optical pickup 24.

As shown in FIG. 13, the difference between the two sets of offset data obtained with the optical pickup 24 is nearly a constant. In this case, it is sufficient to store only one of the two tables into ROM 26. When recording (or reproducing) data, CPU 28 may read out the reproduction (or recording) table, and offset the value by a constant, and then set this modified offset data to the offset generating unit 31. In this way, it is not necessary to measure two sets of offset data. This reduces adjustment work before shipment, and makes it possible to use a ROM of a small capacity.

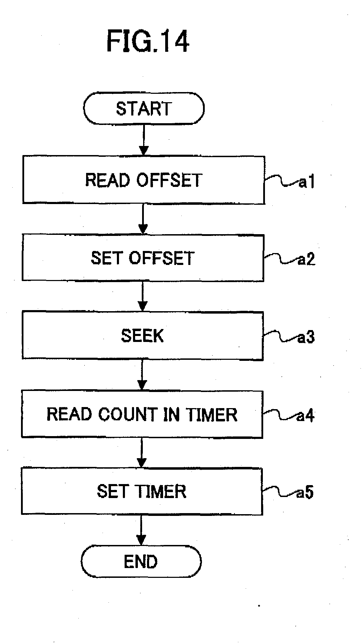

CPU 28 may add the offset data read out from ROM 26 to the FE signal in a seek operation following the procedure in FIG. 14.

FIG. 14 is a flowchart showing the operation of adding the offset data to the FE signal in the sixth embodiment.

In step a1, CPU 28 reads out a focus offset related to a target address t. The corresponding target radius r can be calculated from the target address t.

Because data stored in ROM 26 are discrete, if the target radius r is between two adjacent radii stored in ROM 26, the corresponding optimum focus offset f can be calculated by the first order approximation from the two neighboring data points, or by any method other than the first order approximation.

In step a2, CPU 28 sets the obtained focus offset to the offset generating unit 31.

In step a3, CPU 28 directs to drive the seek motor to move the optical pickup 24 to the target address t. This is the usual seek operation.

In step a4, CPU 28 reads count in the timer 29.

In step a5, CPU 28 sets a predetermined value to the timer 29.

However, addition of the focus offset to the FE signal during adjustment of the focusing position of the object lens in the focusing direction may disturb the focusing position adjustment, for example, causing a step-like response in the adjustment. Therefore, addition of the focus offset to the FE signal during a recording operation or a reproducing operation may degrade the recording quality or the reproducing quality.

In the present embodiment, as shown in FIG. 14, the focus offset is added to the FE signal before the optical pickup 24 is moved for actual use, thus the focusing position control is not influenced by servo disorder, and the focus offset is the optimum value when the recording operation or the reproducing operation is started.

If the recording operation or the reproducing operation is performed for a relatively long time, the radial position where the recording operation or the reproducing operation is performed may change, and accordingly the optimum focus offset may change. For this reason, CPU 28 checks the state of the timer 29 periodically in the recording operation or the reproducing operation and determines whether a predetermined time period has elapsed after completion of the seek operation. CPU 28 interrupts the recording operation or the reproducing operation for a while if the recording operation or the reproducing operation has been performed continuously for a predetermined time period after completion of the seek operation. CPU 28 then restarts the recording operation or the reproducing operation at the interruption address on the optical disk 23.

Since the seek operation must be performed when the recording operation or the reproducing operation is restarted, the operation shown in FIG. 14 is carried out, thus when the recording operation or the reproducing operation is restarted, the position of the object lens in the focusing direction is adjusted to a position related to an optimum focus offset corresponding to the target address.

The value set to the timer 29 is determined from variation of the optimum focus offset corresponding to a change of the radial position on the optical disk 23.

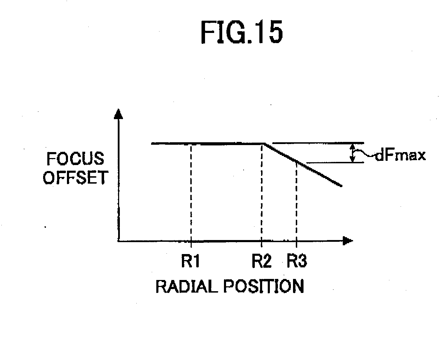

FIG. 15 is a graph showing the variation of an optimum focus offset in a recording operation or a reproducing operation.

In FIG. 15, if the acceptable variation of the focus offset is dFmax, which is determined by the requirement of the recording quality and the reproducing quality on the optical disk 23, and the optimum focus offset changes by dFmax when the recording or the reproducing operation is performed continuously from a radial position R2 to a radial position R3 on the optical disk 23, CPU 28 sets to the timer 29 a value less than the time required to complete the recording operation or the reproducing operation continuously from a radial position R2 to a radial position R3 on the optical disk 23. By setting this value sufficiently small compared with dFmax, which is the largest change of the focus offset in the radial direction all over optical disk 23, the focus offset can be set to an optimum value before the recording quality or the reproducing quality is degraded.

As shown in FIG. 15, when recording data from a radial position R1 to the radial position R2 on the optical disk 23, because the value of the focus offset does not change, it is not necessary to modify the focus offset. Thus, CPU 28 sets in the timer 29 a value equal to the time required to complete the recording operation or the reproducing operation continuously from R1 to R2 before the recording operation or the reproducing operation in the region from R1 to R2 starts. As a result, the recording operation or the reproducing operation has no need to be interrupted at all, and the recording operation or the reproducing operation can be performed without reduction of the transmission rate in the recording operation or the reproducing operation.

In this way, CPU 28 sets the value in the timer 29 to be large if the change of the focus offset is small, and sets the value in the timer 29 to be small if the change of the focus offset is large; therefore, it is possible to reduce the number of times of focus offset readjustment, and hence to reduce the number of times of interruption for the re-adjustment,

According to the present embodiment, the optical data reproducing device of the present embodiment includes an optical pickup 24 for recording data to and reproducing data from the optical disk 23, a focusing error (FE) signal generating unit 25 for generating a focusing error (FE) signal from the signal output from the optical pickup 24, an offset generating unit 31 for generating a voltage corresponding to an offset according to a preset value, an accumulator 27 for adding the offset value output from the offset generating unit 31 to the FE signal from the FE signal generating unit 25, a filter circuit 30 that corrects the signal output from the accumulator 27 for gain compensation and phase compensation of a focusing servo system, and a driver circuit 32 for driving a focusing actuator installed in the optical pickup 24 according to the signal output from the filter circuit 30. During a seek operation, an optimum focus offset is set to the offset generating unit 31, and the seek operation is ended after a predetermined time period is set to the timer 29. The state of the timer 29 is monitored in the recording operation or the reproducing operation after the seek operation to determine whether the preset time period has elapsed. If it is elapsed, the recording operation or the reproducing operation is interrupted for a while, and the recording operation or the reproducing operation is restarted at the interruption address on the optical disk 23. Therefore, it is possible to precisely correct the focus offset related to the optimum recording quality that changes along the radial position of the optical disk 23, and thus to obtain an optical disk device having high recording quality or reproducing quality.

The time set to the timer 29 is determined by considering variation of the optimum focus offset with the radial position on the optical disk 23, which occurs when the optical pickup 24 moves along the radial direction of the optical disk 23 in the recording operation or the reproducing operation. This value is determined so that the change of the optimum focus offset does not influence the recording or reproducing quality. Therefore, it is possible to re-adjust the optimum focus offset to a new optimum value before the previous optimum focus offset becomes inappropriate due to movement of the optical pickup 24 along the radial direction of the optical disk 23 in the recording operation or the reproducing operation. Thus, it is possible to obtain an optical disk device having high recording quality or reproducing quality.

Because the time set to the timer 29 is determined by considering the change of the optimum focus offset, this value is set large in an area where the change of the focus offset is small, and set small in areas where the change of the focus offset is large; therefore, it is possible to reduce the number of times of focus offset re-adjustment, and hence to reduce the number of times of interruption for the re-adjustment.

The ROM 26 is provided to store focus offset data, which are measured in advance, corresponding to optimum recording or reproducing quality at a number of positions on the optical disk 23 at equal intervals and different radii. In actual recording or reproducing operations, the focus offset may be read out from ROM 26 and set to the offset generating unit 31. Therefore, in user's practical use, adjustment when mounting the optical disk 23 is not necessary, and the adjustment time in mounting can be shortened.

By providing a jitter measurement unit to measure the jitter of the reproduced signal, and determining the optimum focus offset under the condition that the jitter is the smallest, it is possible to obtain an optical disk device having higher recording quality or reproducing quality.

Seventh Embodiment

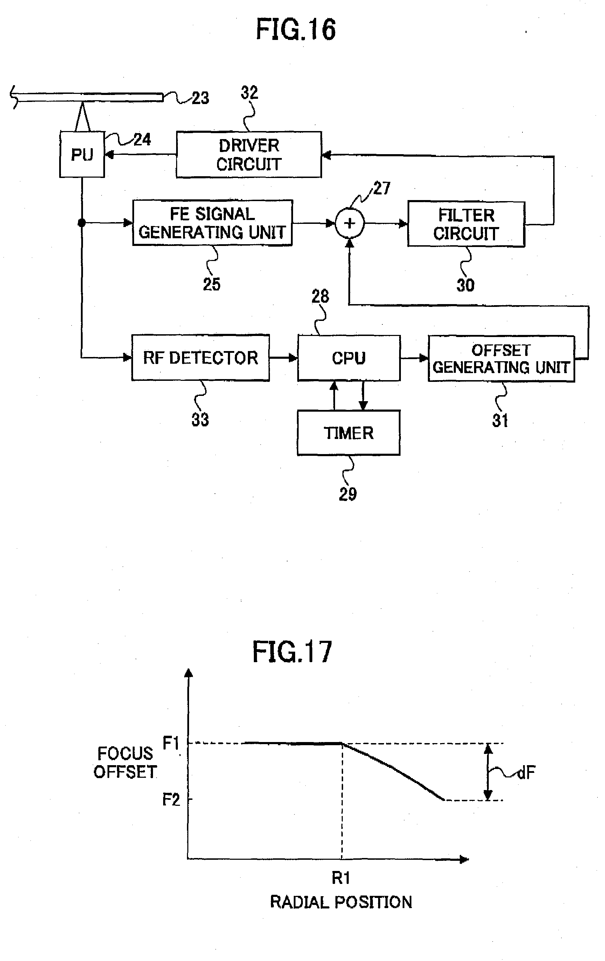

FIG. 16 is a view of a configuration of an optical data recording and reproducing device according to the seventh embodiment of the present invention.

The optical data recording and reproducing device according to the present embodiment basically has the same configuration as that of the sixth embodiment as shown in FIG. 10, except that ROM 26 in the seventh embodiment is replaced by a RF amplitude detection circuit 33. Below, the same numeral references are used for the same elements of the optical data recording device as those in the sixth embodiment, and overlapping descriptions are omitted.

The RF amplitude detection circuit 33 measures an amplitude of a RF signal output from the optical pickup 24.

When mounting the optical disk 23, in operation of reading the RF signal in regions where the RF signal exist in the inner area of the optical disk 23,, the RF amplitude detection circuit 33 measures the amplitude of the RF signal output from the optical pickup 24, and CPU 28 sets appropriate offset data to the offset generating unit 31 so that the amplitude of the RF signal measured by the RF amplitude detection circuit 33 becomes maximum.

FIG. 17 is a graph showing a relation between the focus offset and the radial position of the optical disk 23.

CPU 28 sets the focus offset in the most peripheral region (for example, the area near the outer edge) of the optical disk 23 to be a value (indicated by F2 in FIG. 17) shifted by a certain value (indicated by dF in FIG. 17) from the focus offset (indicated by F1 in FIG. 17) obtained by adjustment in the inner area of the optical disk 23. As shown in FIG. 17, the radial position where the focus offset begins to change (that is, the place where change of the focus offset increases largely) is R1. CPU 28 calculates a focus offset by the first order approximation from R1 to the most peripheral region of the optical disk 23, and sets the obtained focus offset to the offset generating unit 31.

CPU 28 may adjust the focus offset so that the measured amplitude of the RF signal becomes a maximum, alternatively, CPU 28 may use a jitter measurement unit to measure the jitter of the RF signal output from the optical pickup 24, determine the focus offset when the jitter is the smallest, and set the obtained focus offset to the offset generating unit 31.

For adjustment of the optical disk 23, address data are recorded in the optical disk 23 in advance. CPU 28 may determine the desired focus offset by utilizing this signal. For example, when detecting the address data using this signal, CPU 28 may find the focus offset when the signal output from the optical pickup 24 has the optimum quality. Then, CPU 28 may set the obtained focus offset to the offset generating unit 31. In doing so, it is possible to make address detection and the recording operation stable.

For example, CPU 28 may use the ADIP address data in the case of DVD+R, DVD+RW; or the LPP address data in the case of DVD-R, DVD-RW; or the ATIP address data in the case of CD-R, CD-RW.

More specifically, CPU 28 may determine the focus offset under the condition that the amplitude of a push-pull signal, or a wobbling signal, or an LPP signal becomes the largest, and set the obtained focus offset to the offset generating unit 31.

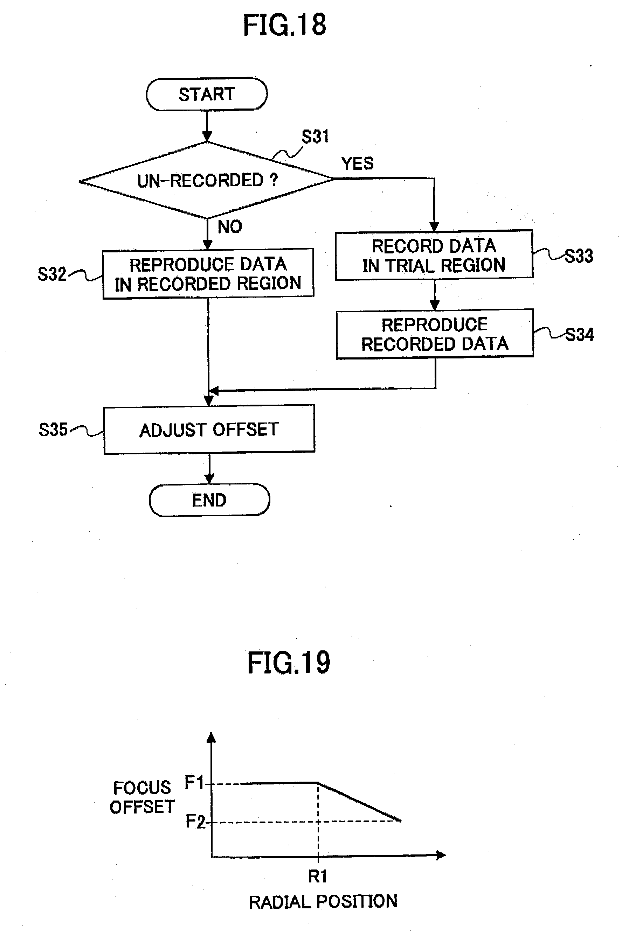

FIG. 18 is a flowchart showing a method of determining the focus offset in the seventh embodiment.

When CPU 28 adjusts the focus offset so that the amplitude of a RF signal becomes the largest or the jitter of the RF signal becomes the smallest, and sets the obtained focus offset to the offset generating unit 31, if the optical disk 23 is a recordable optical disk,

In step S31, CPU 28 determines whether the optical disk 23 is unrecorded.

In step S32, if the optical disk 23 is recorded, CPU 28 reproduces data in the recorded region.

In step S33, if the optical disk 23 is unrecorded, CPU 28 records data in the trial writing region of the optical disk 23.

In step S34, CPU 28 then reproduces the recorded data.

In step S35, CPU 28 adjusts the focus offset so that the reproducing quality is optimum, and sets thus obtained focus offset to the offset generating unit 31.

Because when data are recorded in the optical disk 23, the Read-in Area of the optical disk 23 must be recorded with data, CPU 28 may confirm if data are recorded in the Read in Area to determine whether the optical disk 23 is unrecorded.

In this way, because CPU 28 reproduces data in the recorded region of the optical disk 23, and adjusts the focus offset so that the reproducing quality is optimum, the adjustment before shipment as described in the sixth embodiment is not necessary, and the equipment for this adjustment is not needed, either.

In the sixth embodiment, for optical disks having characteristics different from the one used for adjustment in the factory, the method of the sixth embodiment is not applicable. In the present embodiment, because the optical disk 23 is adjusted in mounting, even if it has different characteristics from that used for adjustment in the factory, the adjustment can be made.

While adjusting the focus offset in the inner area of the optical disk 23 as described above, CPU 28 also adjusts the focus offset in the peripheral area of the optical disk 23 in the same way. That is, CPU 28 records data in the trial writing region in the peripheral area of the optical disk 23, then reproduces the recorded data, and then adjusts the focus offset so that the reproducing quality becomes optimum, and sets the thus obtained focus offset to the offset generating unit 31.

FIG. 19 is a graph showing a relation between the focus offset and the radial position of the optical disk 23.

In FIG. 19, F1 indicates the focus offset obtained in adjustment in the inner area of the optical disk 23, and F2 indicates that obtained in the most peripheral area of the optical disk 23.

In this way, it is possible to make focus adjustment suitable to the practical optical disk 23.

According to the present embodiment, it is possible to correct the focus offset related to the optimum recording quality that changes along the radial position of the optical disk 23, and thus to obtain an optical disk device having high recording quality or reproducing quality.

In addition, it is possible to re-adjust the previous optimum focus offset to a new optimum value before the recording quality or the reproducing quality starts to degrade due to due to movement of the optical pickup 24 along the radial direction of the optical disk 23 in the recording operation or the reproducing operation.

Because the time set to the timer 29 is set large in an area where the change of the focus offset is small, and set small in areas where the change of the focus offset is large, it is possible to reduce the number of times of focus offset re-adjustment, and hence to reduce the number of times of interruption for the re-adjustment.

The focus offset that results in the optimum recording quality or the reproducing quality in the inner area may be measured beforehand when mounting the optical disk 23. Then, in the region from the inner edge of the optical disk 23 to a radial position where the focus offset begins to change noticeably, the focus offset measured in the inner area is set to the offset generating unit 31; in the most peripheral region of the optical disk 23, a focus offset shifted by a certain value from the focus offset measured in the inner area is set to the offset generating unit 31; in the region from the position where the focus offset begins to change noticeably to the most peripheral region of the optical disk 23, a focus offset calculated by the first order approximation is set to the offset generating unit 31. Therefore, even when the optimum focus offset depends on a specific optical disk, it is possible to appropriately determine the focus offset and obtain an optical disk device having high recording quality or reproducing quality.

Both the focus offset resulting in the optimum recording quality or the optimum reproducing quality in the inner area and the focus offset resulting in the optimum recording or reproducing quality in the peripheral area may be measured beforehand when mounting the optical disk 23. Then in the region from the inner edge of the optical disk 23 to a radial position where the focus offset begins to change noticeably, the focus offset measured in the inner area is set to the offset generating unit 31; in the most peripheral region of the optical disk 23, the focus offset measured in the most peripheral area is set to the offset generating unit 31; in the region from the position where the focus offset begins to change noticeably to the most peripheral region of the optical disk 23, a focus offset calculated by the first order approximation is set to the offset generating unit 31.

Therefore, since optimum focus offsets in both the inner area and the peripheral area are measured, it is possible to obtain an optical disk device having higher recording or reproducing quality.

By providing a jitter measurement unit to measure the jitter of the reproduced signal, and determining the optimum focus offset under the condition that the jitter is the smallest, it is possible to obtain an optical disk device having higher recording or reproducing quality.

When the optical disk 23 is not recorded, data are recorded in the trial writing region of the optical disk 23, and the recorded data are reproduced. Then the focus offset is adjusted so that the quality of the reproduced RF signal is optimum, and thus obtained focus offset is set to the offset generating unit 31. If the optical disk 23 is recorded, data in the recorded region are reproduced to determine the focus offset making the reproducing quality optimum. Therefore, even if the optical disk 23 is unrecorded, it is possible to adjust the optimum focus offset by using the trial writing region and the RF signal. Further, when the optical disk 23 is recorded, data in the recorded region are reproduced without using the trial writing region.

By providing a unit for measuring the amplitude of a wobbling signal, and by adjusting the focus offset so that the amplitude of the wobbling signal becomes a maximum, it is possible to reliably obtain address data and synchronization data and to achieve high recording quality or reproducing quality.

While the present invention is described above with reference to specific embodiments chosen for purpose of illustration, it should be apparent that the invention is not limited to these embodiments, but numerous modifications could be made thereto by those skilled in the art without departing from the basic concept and scope of the invention.

Summarizing the effect of the invention, even when a multi-pulse signal is used to drive a laser, it is possible to maintain the power of the laser to be an optimum value during a recording operation, and high recording quality is obtainable all over the optical data recording medium.

Even when the temperature fluctuation of the laser is a predominant factor causing reduction of the recording quality, it is possible to maintain the power of the laser to be an optimum value during a recording operation, and high recording quality is obtainable all over the optical data recording medium.

Even when fluctuation of the sensitivity of the recording film of the optical data recording medium is a predominant factor causing reduction of the recording quality, it is possible to maintain the power of the laser to be an optimum value during a recording operation, and high recording quality is obtainable all over the optical data recording medium.

The time period of recording interruption required for measurement of the recording state can be shortened, and thus the total recording time can be shortened.

Even if there are defects in the recording region of the optical data recording medium, the recording quality of the next recording operation does not degrade much, therefore, it is possible to obtain stable recording quality.

It is possible to maintain the power of the laser to be an optimum value and high recording quality is obtainable all over the optical recording medium when a multi-pulse driving signal is used to record data to a WORM (write once read many) type optical recording medium, such as a CD-R, or DVD-R. Furthermore, even when a multi-pulse driving signal is used to record data to a rewritable optical recording medium, such as a CD-RW, or DVD-RW, it is also possible to maintain the power of the laser to be an optimum value and high recording quality is obtainable all over the optical recording medium.

Since a tilt offset of the optical recording medium when measuring the recording quality is the same as that when reading data in the trial writing region in OPC, it is possible to optimize the setting of the tilt offset. Further, since the optimum power of the laser during a recording operation, which yields optimum recording quality, is determined based on the above results, it is possible to maintain high recording quality throughout the recording region immediately after OPC.

It is possible to precisely correct the focus offset related to the optimum recording quality that changes along the radial position of the optical recording medium, and thus to obtain an optical disk device having high recording or reproducing quality.

It is possible to re-adjust the optimum focus offset to a new optimum value before the previous optimum focus offset becomes inappropriate due to movement of the optical pickup along the radial direction of the optical recording medium in a recording operation or the reproducing operation. Thus, it is possible to obtain an optical disk device having high recording or reproducing quality.

Because the time set to a timer is set large in an area where the change of the focus offset is small, and set small in areas where the change of the focus offset is large, it is possible to reduce the number of times of focus offset re-adjustment, and hence to reduce the number of times of interruption for the re-adjustment.

It is possible to shorten adjustment time in mounting.

It is possible to appropriately determine the focus offset and obtain an optical disk device having high recording or reproducing quality even when the optimum focus offset depends on a specific optical recording medium.

Even if the optical recording medium is unrecorded, it is possible to adjust the optimum focus offset by using the trial writing region and the RF signal.

By using a wobbling signal, it is possible to reliably obtain address data and synchronization data and to achieve high recording quality or reproducing quality.

This patent application is based on Japanese Priority Patent Application No. 2002-352655 filed on December 4, 2002, and Japanese Priority Patent Application No. 2003-080989 filed on March 24, 2003, the entire contents of which are hereby incorporated by reference.

## Claims

1. An optical data recording method, comprising the steps of:

   interrupting an operation of recording data in an optical data recording medium when a predetermined amount of data is continuously recorded in the optical data recording medium by using a laser beam emitted from a laser;
   measuring a recording state of the optical data recording medium immediately before the interruption;

correcting a recording power of the laser beam for a next recording operation in the optical data recording medium based on the measured recording state; and

starting the next recording operation by using the laser beam with the determined recording power in the optical data recording medium at a position immediately after the interruption.

2. The optical data recording method as claimed in claim 1, wherein

in the step of interrupting, the predetermined amount of data is determined so that a time period required for completing recording of the predetermined amount of data is shorter than a time period over which a recording quality degrades due to a rise of a temperature of the laser.

3. The optical data recording method as claimed in claim 1, wherein

in the step of interrupting, the predetermined amount of data is determined so that a length along a radial direction of the optical data recoding medium covered by the predetermined amount of data is shorter than a length over which a recording quality degrades due to a fluctuation of a sensitivity of a recording layer of the optical data recoding medium.

4. The optical data recording method as claimed in claim 1, wherein

in the step of measuring, the recording state is measured during a seek operation performed for the next recording operation after the interrupted recording operation.

5. The optical data recording method as claimed in claim 1, wherein

in the step of correcting, a change of the recording power in each correction is restricted to be less than a predetermined value.

6. The optical data recording method as claimed in claim 1, wherein

in the step of measuring, the recording state of the optical data recording medium is obtained by measuring an asymmetry of a reproduced signal.

7. The optical data recording method as claimed in claim 1, wherein

in the step of measuring, the recording state of the optical data recording medium is obtained by measuring a modulation of a reproduced signal.

8. An optical data recording device, comprising:

a recording state measurement unit configured to measure a recording state of an optical data recording medium;

a recording power calculation unit configured to calculate a recording power of a laser beam emitted from a laser for a next recording operation in the optical data recording medium based on the measured recording state;

a laser control unit configured to control the laser based on the calculated recording power; and

a recording control unit configured to interrupt an operation of recording data in the optical data recording medium when a predetermined amount of data is continuously recorded in the optical data recording medium, direct the recording state measurement unit to measure a recording state of the optical data recording medium immediately before the interruption, direct the recording power calculation unit and the laser control unit to determine a recording power of the laser beam for a next recording operation in the optical data recording medium based on the measured recording state, and start the next recording operation by using the laser beam with the determined recording power in the optical data recording medium at a position immediately after the interruption.

9. An optical data processing device, comprising an optical data recording device including:

a recording state measurement unit configured to measure a recording state of an optical data recording medium;

a recording power calculation unit configured to calculate a recording power of a laser beam emitted from a laser for a next recording operation in the optical data recording medium based on the measured recording state;

a laser control unit configured to control the laser based on the calculated recording power;

a recording control unit configured to interrupt an operation of recording data in the optical data recording medium when a predetermined amount of data is continuously recorded in the optical data recording medium, direct the recording state measurement unit to measure a recording state of the optical data recording medium immediately before the interruption, direct the recording power calculation unit and the laser control unit to determine a recording power of the laser beam for a next recording operation in the optical data recording medium based on the measured recording state, and start the next recording operation by using the laser beam with the determined recording power in the optical data recording medium at a position immediately after the interruption.

10. An optical data recording method, comprising the steps of:

interrupting an operation of recording data in an optical data recording medium when a predetermined amount of data is continuously recorded in the optical data recording medium by using a laser beam emitted from a laser; measuring a recording state of the optical data recording medium immediately before the interruption to measure a recording quality; correcting a recording power of the laser beam for a next recording operation in the optical data recording medium based on the determined recording quality; and starting the next recording operation by using the laser beam with the determined recording power in the optical data recording medium at a position immediately after the interruption,

wherein

in the step of measuring, the recording quality is measured in a seek operation performed when starting the next recording operation after the interrupted recording operation, a setting being made so that a reading quality is an optimum during the measurement of the recording quality, and the setting being made so that the recording quality is an optimum after the measurement of the recording quality.

11. The optical data recording method as claimed in claim 10, wherein

in the step of measuring, an offset of a focus position of a focus servo is set so that the reading quality is an optimum during the measurement of the recording quality in the seek operation, and the offset of the focus position is set so that the recording quality is an optimum after the measurement of the recording quality.

12. The optical data recording method as claimed in claim 10, wherein

in the step of measuring, an offset of a tilt of the optical data recording medium is set so that the reading quality is an optimum during the measurement of the recording quality in the seek operation, and the offset of the tilt is set so that the recording quality is an optimum after the measurement of the recording quality.

13. An optical data recording device, comprising:

a recording state measurement unit configured to measure a recording state of an optical data recording medium to measure a recording quality;
a recording power calculation unit configured to calculate a recording power of a laser beam emitted from a laser for a next recording operation in the optical data recording medium based on the measured recording quality; a laser control unit configured to control the laser based on the calculated recording power; a recording control unit configured to interrupt an operation of recording data in the optical data recording medium when a predetermined amount of data is continuously recorded in the optical data recording medium, direct the recording state measurement unit to measure a recording state of the optical data recording medium immediately before the interruption, direct the recording power calculation unit and the laser control unit to determine a recording power of the laser beam for,a next recording operation in the optical data recording medium based on the measured recording quality, and start the next recording operation by using the laser beam with the determined recording power in the optical data recording medium at a position immediately after the interruption; and a focus position offset setting unit configured to set an offset of a focus position of a focus servo,

wherein the focus position offset setting unit sets the offset of the focus position of the focus servo so that the reading quality is an optimum during the measurement of the recording quality in the seek operation, and sets the offset of the focus position so that the recording quality is an optimum after the measurement of the recording quality in the seek operation.

14. An optical data recording device, comprising:

a recording state measurement unit configured to measure a recording state of an optical data recording medium to measure a recording quality;
a recording power calculation unit configured to calculate a recording power of a laser beam emitted from a laser for a next recording operation in the optical data recording medium based on the measured recording quality; a laser control unit configured to control the laser based on the calculated recording power; a recording control unit configured to interrupt an operation of recording data in the optical data recording medium when a predetermined amount of data is continuously recorded in the optical data recording medium, direct the recording state measurement unit to measure a recording state of the optical data recording medium immediately before the interruption, direct the recording power calculation unit and the laser control unit to determine a recording power of the laser beam for a next recording operation in the optical data recording medium based on the measured recording quality, and start the next recording operation by using the laser beam with the determined recording power in the optical data recording medium at a position immediately after the interruption; and a tilt offset setting unit configured to set an offset of a tilt of the optical data recording medium,

wherein the tilt offset setting unit sets the offset of the tilt so that the reading quality is an optimum during the measurement of the recording quality in the seek operation, and sets the offset of the tilt so that the recording quality is an optimum after the measurement of the recording quality in the seek operation.

15. An optical disk device for recording data to or reproducing data from an optical disk, comprising:

an optical pickup that writes data to or reads data from the optical disk;
a focusing error signal generating unit that generates a focusing error signal from a signal output from the optical pickup;
an offset generating unit that generates an offset of a focusing position according to a preset value;
an accumulator that adds the offset to the focusing error signal and outputs the summed signal;
a filter circuit that adjusts a gain and a phase of a focusing servo system based on the summed signal from the accumulator; and
a driver circuit that drives the optical pickup according to a signal output from the filter circuit,

wherein
in a seek operation, an optimum offset of the focusing position is set to the offset generating unit as the preset value, and the seek operation is finished after setting a time period in a timer;
in a recording operation or a reproducing operation after the seek operation, a count in the timer is monitored to determine whether the time period set in the timer has elapsed; and
the recording operation or reproducing operation is interrupted when the time period set in the timer has elapsed, and a next seek operation is performed and a next recording operation or a next reproducing operation is started at a position of the interruption.

16. The optical disk device as claimed in claim 15, wherein

the time period set to the timer is determined so that a variation of the optimum of the offset of the focus position due to movement of the optical pickup along a radial position on the optical disk in the recording operation or the reproducing operation does not influence a recording quality or a reproducing quality.

17. The optical disk device as claimed in claim 15, wherein

the time period set to the timer is determined based on a variation of the optimum of the offset of the focus position.

18. The optical disk device as claimed in claim 15, further comprising a storage unit configured to store focus offset data measured in advance and corresponding to optimum recording or reproducing quality at a plurality of positions on the optical disk at different radii and at equal intervals;
wherein
the focus offset data corresponding to one of the positions is read out from the storage unit and set to the offset generating unit in the recording operation or the reproducing operation as the offset added to the focusing error signal.

19. The optical disk device as claimed in claim 15, wherein

when mounting the optical disk, an offset of the focus position resulting in the optimum recording quality or the optimum reproducing quality is measured beforehand in an inner area of the optical disk;

in a region from a most inner area of the optical disk to a radial position of the optical disk where a change of the offset of the focus position begins to increase, the measured offset of the focus position is set to the offset generating unit;

in a most peripheral region of the optical disk, an offset of the focus position obtained by shifting the offset measured in the inner area by a preset value is set to the offset generating unit; and

in a region from the position where the change of the offset of the focus position begins to increase to the most peripheral region of the optical disk, an offset calculated by a first order approximation is set to the offset generating unit.

20. The optical disk device as claimed in claim 15, wherein

when mounting the optical disk, offsets of the focus position resulting in the optimum recording quality or the optimum reproducing quality are measured beforehand in an inner area and a peripheral area of the optical disk, respectively;

in a region from a most inner area of the optical disk to a radial position of the optical disk where a change of the offset of the focus position begins to increase, the offset measured in the inner area is set to the offset generating unit;

in the most peripheral region of the optical disk, the offset measured in the peripheral area is set to the offset generating unit; and

in a region from the position where the change of the offset of the focus position begins to increase to the most peripheral region of the optical disk, an offset of the focus position calculated by a first order approximation is set to the offset generating unit.

21. The optical disk device as claimed in claim 19, further comprising a jitter measurement unit configured to measure a jitter of the reproduced signal from the pickup,

wherein

the optimum of the offset of the focus position is determined under a condition that the jitter is the smallest.

22. The optical disk device as claimed in claim 19, further comprising an amplitude measurement unit configured to measure an amplitude of the reproduced signal from the pickup,

wherein

the optimum of the offset of the focus position is determined under a condition that the amplitude is the highest.

23. The optical disk device as claimed in claim 21, wherein

if the optical disk is not recorded, data are recorded in a trial recording region of the optical disk; and

the data recorded in the trial recording region are reproduced to determine the offset of the focus position that results in the optimum of the reproducing quality.

24. The optical disk device as claimed in claim 22, wherein if the optical disk is recorded, data in a recorded region of the optical disk are reproduced to determine the offset of the focus position that results in the optimum of the reproducing quality under a condition that an amplitude of the reproduced signal is the highest.

25. The optical disk device as claimed in claim 19, further comprising a wobbling signal amplitude measurement unit configured to measure an amplitude of a wobbling signal;

wherein the optimum of the offset of the focus position is determined under a condition that the amplitude of the wobbling signal is the highest.

# FIG.1

A

| A1 | A2 | A3 |

B1     B2

# FIG.2A

# FIG.2B

# FIG.2C

$P < P_{po}$

$P = P_{po}$

$P > P_{po}$

# FIG.3

# FIG.4

EP 1 426 931 A2

# FIG.5

WAITING AREA | RECORDING AREA

t0 — TENTATIVE SEEK OBJECT

t1 — TRUE SEEK OBJECT

# FIG.6

# FIG.7

```
        ┌──────────────┐
        │    START     │
        └──────┬───────┘
               │
               ▼
    ┌─────────────────────┐
    │    SET OFFSET_R     │~~S1
    └──────────┬──────────┘
               │
               ▼
    ┌─────────────────────┐
    │      SEEK T0        │~~S2
    └──────────┬──────────┘
               │
               ▼
    ┌─────────────────────┐
    │      MEASURE         │~~S3
    │  RECORDING QUALITY   │
    └──────────┬──────────┘
               │
               ▼
    ┌─────────────────────┐
    │    SET OFFSET_W     │~~S4
    └──────────┬──────────┘
               │
               ▼
    ┌─────────────────────┐
    │       WAIT          │~~S5
    └──────────┬──────────┘
               │
               ▼
        ┌──────────────┐
        │     END      │
        └──────────────┘
```

# FIG.8

# FIG.9

```
        ┌─────────────┐
        │    START    │
        └──────┬──────┘
               │
               ▼
   ┌──────────────────────┐
   │    SET OFFSET_R      │ ～S21
   └──────────┬───────────┘
              │
              ▼
   ┌──────────────────────┐
   │      SEEK T0         │ ～S22
   └──────────┬───────────┘
              │
              ▼
   ┌──────────────────────┐
   │      MEASURE          │
   │  RECORDING QUALITY    │ ～S23
   └──────────┬───────────┘
              │
              ▼
   ┌──────────────────────┐
   │    SET OFFSET_W      │ ～S24
   └──────────┬───────────┘
              │
              ▼
   ┌──────────────────────┐
   │        WAIT           │ ～S25
   └──────────┬───────────┘
              │
              ▼
        ┌─────────────┐
        │     END     │
        └─────────────┘
```

# FIG.10

DRIVER CIRCUIT 32

PU 24

FE SIGNAL GENERATING UNIT 25

+ 27

FILTER CIRCUIT 30

ROM 26

CPU 28

OFFSET GENERATING UNIT 31

TIMER 29

23

# FIG.11

OPTIMUM FOCUS OFFSET

R1  R2  R3  R4  R5

RADIAL POSITION

# FIG.12

| RADIAL POSITION: R1 | FOCUS OFFSET: F1 |
|---|---|
| RADIAL POSITION: R2 | FOCUS OFFSET: F2 |
| RADIAL POSITION: R3 | FOCUS OFFSET: F3 |
| RADIAL POSITION: R4 | FOCUS OFFSET: F4 |
| RADIAL POSITION: R5 | FOCUS OFFSET: F5 |

# FIG.13

FOCUS OFFSET

FOCUS OFFSET FOR REPRODUCTION

FOCUS OFFSET FOR RECORDING

RADIAL POSITION

# FIG.14

```
           ┌─────────────┐
           │    START    │
           └──────┬──────┘
                  │
                  ▼
    ┌──────────────────────────┐
    │       READ OFFSET        │ ～a1
    └─────────────┬────────────┘
                  │
                  ▼
    ┌──────────────────────────┐
    │        SET OFFSET        │ ～a2
    └─────────────┬────────────┘
                  │
                  ▼
    ┌──────────────────────────┐
    │           SEEK           │ ～a3
    └─────────────┬────────────┘
                  │
                  ▼
    ┌──────────────────────────┐
    │   READ COUNT IN TIMER    │ ～a4
    └─────────────┬────────────┘
                  │
                  ▼
    ┌──────────────────────────┐
    │        SET TIMER         │ ～a5
    └─────────────┬────────────┘
                  │
                  ▼
           ┌─────────────┐
           │     END     │
           └─────────────┘
```

# FIG.15

FOCUS OFFSET

dFmax

R1        R2   R3

RADIAL POSITION

# FIG.16

PU ~24

DRIVER CIRCUIT ~32

~23

FE SIGNAL GENERATING UNIT ~25

+ ~27

FILTER CIRCUIT ~30

RF DETECTOR ~33

CPU ~28

OFFSET GENERATING UNIT ~31

TIMER ~29

# FIG.17

FOCUS OFFSET

F1

F2

dF

R1

RADIAL POSITION

# FIG.18

```
                    START

                     │
                     ▼         ⟋ S31
              ◇─────────────◇         YES
              │ UN-RECORDED ? ├──────────────┐
              ◇─────────────◇               │
                     │ NO                    ▼
                     ▼                ┌──────────────┐
  S32  ┌──────────────────┐          │  RECORD DATA  ├── S33
       │  REPRODUCE DATA   │          │ IN TRIAL REGION│
       │ IN RECORDED REGION│          └──────────────┘
       └──────────────────┘                 │
                     │                        ▼
                     │                ┌──────────────┐
                     │                │   REPRODUCE   ├── S34
                     │                │ RECORDED DATA │
                     │                └──────────────┘
                     │                        │
                     ◄───────────────────────┘
                     ▼
  S35  ┌──────────────────┐
       │   ADJUST OFFSET   │
       └──────────────────┘
                     │
                     ▼
                   END
```

# FIG.19

```
          ▲
 FOCUS  F1 ┤ - - - ─────────
 OFFSET    │               ╲
        F2 ┤ - - - - - - - - ╲ - -
           │            ┊     ╲
           └────────────┼──────────▶
                        R1
               RADIAL POSITION
```